# EUROPEAN PATENT SPECIFICATION

(11) **EP 0 857 001 B1**
(45) Date of publication and mention of the grant of the patent: **11.03.2009**
(21) Application number: 97122818.4
(22) Date of filing: 23.12.1997
(51) Int. Cl.: H04Q 11/04

(54) **Apparatus and method for wireless ATM Network interface card**
Einrichtung und Verfahren zur drahlosen ATM-Netzschnittstellenkarte
Appareil et procédé pour une carte d'interface de réseau ATM sans fil

(30) Priority: 31.01.1997 US 791737; 31.01.1997 US 791738
(43) Date of publication of application: 05.08.1998
(73) Proprietor: Juniper Networks, Inc., Sunnyvale, CA 94089-1206 (US)
(72) Inventor: Johnston, Cesar A., Franklin Park, New Jersey 08823 (US)
(74) Representative: Grünecker, Kinkeldey, Stockmair & Schwanhäusser Anwaltssozietät

(56) References cited:
- WO-A-93/19559
- RAYCHAUDHURI D ET AL: "WATMNET: A PROTOTYPE WIRELESS ATM SYSTEM FOR MULTIMEDIA PERSONAL COMMUNICATION" 1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996, vol. VOL. 1, 23 June 1996, INSTITUTE OF ELECTRICAL & ELECTRONICS ENGINEERS, pages 469-477, XP000625717

## Description

### Background of the Invention:

This invention relates to a network interface card (NIC) for providing an interface between a host and a Wireless Asynchronous Transfer Mode (WATM) based communication network. This invention also relates to a queue management method for the network interface card.

Asynchronous Transfer Mode (ATM) has long been advocated as an important technology for interconnecting wide area heterogenerous networks. In networks constructed utilizing ATM technologies, transported data is divided into small, fixed length units called cells. These cells are further divided into a header and data portion, with the header portion comprising identification, priority and routing information, and the data portion comprising actual data transported between systems.

An important distinguishing characteristic of ATM and networks constructed therefrom, is that it is an end-to-end technology, meaning that with ATM networks the protocols (ATM) are uniform throughout the entire network. That is to say, the ATM on the desktop is the same as the ATM on the Local Area Network (LAN), is the same as the ATM on the Wide Area Network. Consequently, organizations that employ ATM networks do not need extra equipment (like routers or gateways) to interconnect their networks thereby reducing the cost and complexity of the networks while at the same time improving their flexibility.

Due to these and other inherent advantages, there has been widespread and rapid deployment of ATM networks. This rapid deployment of ATM networks, and the contemporaneous need to provide reliable wireless ubiquitous information access to end users, has accelerated the development of Wireless ATM (WATM) networks. Presently, efforts to specify a standard for its protocol reference architecture are underway. See, for example, the article by D. Raychaudhuri et al, entitled "ATM-based Transport Architecture for Multiservices Wireless Personal Communication Networks", which appeared in Vol. 12, No. 8 of IEEE JSAC in October 1994, or proceedings. An example of a Wireless ATM network which has been prototyped to ascertain the requirements for future WATM network has been described by D. Raychaudhuri et al., in an article entitled "WATMnet: A Prototype Wireless ATM System for Multimedia Personal Communication", ICC '96.

In WATMnet, as well as in other WATM networks, a Network Interface Card (NIC) is used to interface a piece of equipment to the WATM network. As can be readily appreciated by those skilled in the art, the architecture of an NIC plays an important role when accessing a high-performance network such as ATM. Specifically, the NIC can become a network bottleneck if its throughput characteristics are not taken into consideration while designing its architecture. Since the Data Link Control Layer (DLC), the Media Access Control layer (MAC), and Physical radio (Rphy) layers are integrated in a WATM NIC, the WATM NIC's processing requirements are more demanding than that of ATM NICS at equivalent transmission rates. (See, for example, R. Dighe et al., "The Multimedia C & C Platform (MCCP), A Network-Centric Architecture for Multimedia", IEEE ATM Workshop '95, October 1995; and C. A. Johnston, "Architecture and Performance of HIPPI-ATM-SONET Terminal Adapters", IEEE Communications, Vol. 33, No. 4, April 1995.) Thus, the design of a high-throughput WATM NIC software/hardware architecture remains a challenging problem.

Critical for the usefulness of such NIC adapters, is an efficient architecture that can allow network communications to proceed in parallel with other operations on a host without excessively slowing down those operations. Also critical to the efficiency of the entire network is a need that the adapter have minimal latency in reception and transmission of data. At the same time, the adapter must be economical to be suitable for accompanying host equipment.

### Summary of the Invention:

It is therefore an object of this invention to provide a wireless interface card which carries out the efficient and flexible wireless interfacing of computer and other electronic devices to ATM networks.

It is another object of this invention to provide a queue management method for the wireless interface card.

According to the invention, a network interface card that provides an interface between a host and a wireless asynchronous transfer mode based communications network, effectively and efficiently offloads and unburdens the host from the formatting, error checking and transmission of data over the wireless network. The network interface card advantageously employs an on-board controller, a local memory, on-board framing and error checking, as well as wireless transmission and receiving.

As a further aspect of the network interface card, data that is to be transmitted or received is advantageously stored within the network interface card according to type, thereby allowing the card to support a number of known, network protocols. As a still further aspect of the network interface card, an entire data link control protocol layer is provided on board the card, further off loading the host from this low level function. Importantly, and in accordance with the method of the present application, data cells which are transmitted are transmitted in a particular sequence until an error in the data link occurs. Upon such condition, the data link recovery procedure is handled by a control processor on the card while, in parallel, remaining cells are transmitted in a particular sequence. Similarly, data cells which are received from the wireless network are received in a particular sequence until an error in the data link occurs. Upon such condition, the data link recovery procedure for is handled by a control processor on the card while, in parallel, remaining cells are received in a particular sequence.

A further understanding of the nature and advantages of this invention may be realized by reference the remaining portions of the specification and drawing.

### Brief Description of the Drawing:

The teachings of the present invention can be readily understood by considering the following detailed description in conjunction with the accompanying drawings, in which:
Fig. 1 shows a wireless ATM network interconnected with an ATM network according to the teachings of the present invention;
Fig. 2 is a diagram for describing a TDMA frame structure used in this invention;
Fig. 3 shows a wireless ATM network and associated communications protocol layers according to the teachings of the present invention;
Fig. 4 is a block diagram showing the components of a WATM NIC according to the present invention;
Fig. 5 shows a simplified hardware block of the WATM NIC (modem not shown) of Fig. 4;
Fig. 6 is a block diagram of a Cell Formatter/Deformatter (404) of Fig. 5;
Fig. 7 is a diagram showing queue management in the WATM NIC including a memory pointer processor (700) of Fig. 4;
Fig. 8 is a block diagram of a TDMA/TDD Frame (408) of Fig. 4;
Fig. 9 is a block diagram of a Controller (402) of Fig. 4;
Fig. 10 is a block diagram of controller software of the WATM NIC of Fig. 4;
Fig. 12 shows a block diagram of details of the NIC (400') of Fig. 11;
Fig. 13 shows a dual-port RAM (413') of Fig. 12;
Fig. 14 is a view for describing a Queue Control Region (414') of Fig. 13;
Fig. 15 is a block diagram for describing the dual-port RAM (314') of Fig. 12;
Fig. 16 is a block diagram of a Co-Processor (210) of Fig. 12;
Fig. 17 shows the data structure in the v851 processor (402) of Fig. 12;
Fig. 18 is a block diagram of an address generator of a first part (PP-I) of a memory pointer processor (PP) (406) of Fig. 12;
Fig. 19 shows a Cell Pool RAM (206) of Fig. 12;
Fig. 20 is a view for describing a transmitter side of the Memory Pointer Processor (PP) (406) of Fig. 12;
Fig. 21 is a flow chart which is for describing the NIC of Fig. 12 and which shows connection setup of a terminal to the v851;
Fig. 22 is a flow chart showing terminal data transfer to the NIC of Fig. 12;
Fig. 23 is a flow chart showing data transmission from the NIC of Fig. 12 to wireless network;
Fig. 24 is a flow chart showing DLC acknowledgement to the NIC of Fig. 12;
Fig. 25 is a view for describing a reception side of the Memory Pointer Processor (PP) (406) of Fig. 12;
Fig. 26 is a flow chart showing connection setup from wireless network to v851 in Fig. 12;
Fig. 27 is a flow chart showing terminal data transfer from IC to terminal in Fig. 12; and
Fig. 28 is a block diagram of an address generator of a second part (PP-II) of the memory Pinter Processor (PP) (406) of Fig. 12.

### Description of the Preferred Embodiments:

A preferred embodiments of the invention will now be described while referring to the figures, several of which may be simultaneously referred to during the course of the following description.

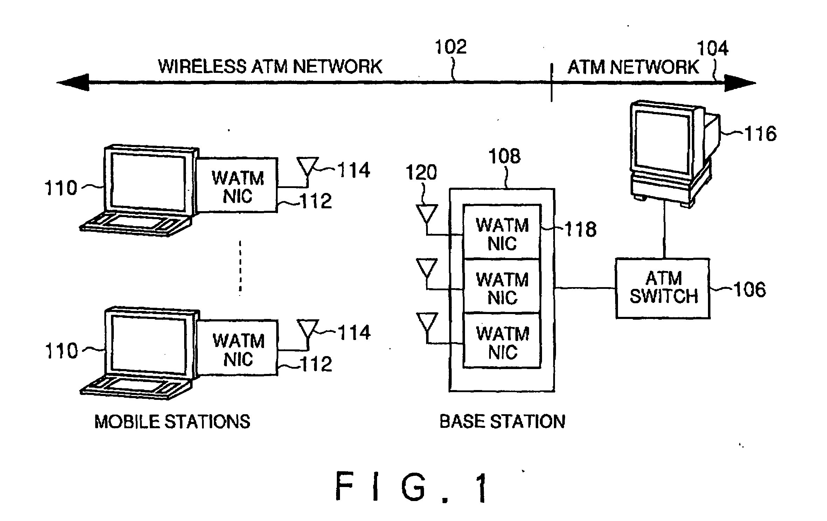

Referring to Fig. 1, there is shown a system including a base station 108 and mobile stations 110. The base station 108 is provided with a wireless asynchronous transfer mode cell network interface card (WATM NIC) 118 of this invention. Likewise, each mobile stations 110 is provided with a WATM NIC 112 of this invention.

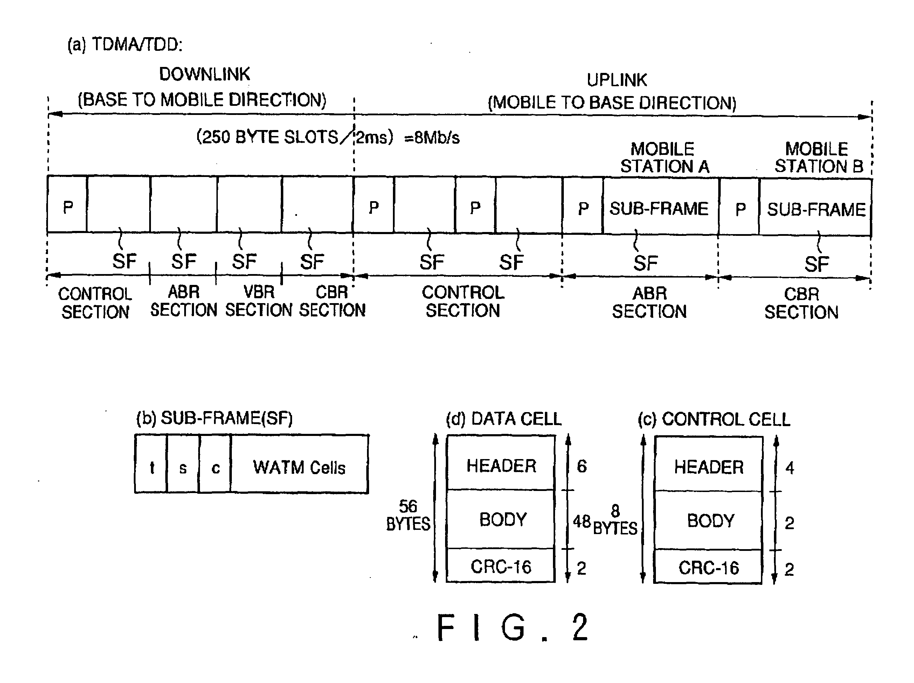

Referring to Fig. 2, there is shown a structure of a Time Division Multiple Access (TDMA) frame used in the system of Fig. 1. Fig. 2(a) shows a transmission format of the TDMA frame having 8Mb/s consisting of 250 byte slots (1 byte slot = 64 bits) every 2ms. Time Division Duplexing (TDD) allows the TDMA frame to be partitioned into a Downlink (Base Station to Mobile Station) section and an Uplink (Mobile Station to Base Station) section.

In the Downlink section, the Base station inserts a preamble P on every frame starting at slot 1 in order to synchronize all mobile stations. The preamble P is followed by a payload area which carries information to all Mobile stations. The payload area is further divided into a number of Sub-Frames SF's which serve as a control section, an Available Bit rate (ABR) Section, a Variable Bit Rate (VBR) Section, and a Constant Bit Rate (CBR) Section. Other sections of, for example, an Unspecified bit Rate (UBR) section may be included in the Downlink section as the Sub-Frame FS.

As shown in Fig. 2(b), each Sub-Frame SF comprises a first word having a field t of two bits that identifies the Sub-Frame type (e.g., Control, ABR, VBR, and CBR sections) and another field s of 14 bits that indicates the number of WATM cells that the Sub-Frame transports. This first word is followed by a CRC (cyclic redundancy check) word c having check data for CRC-16 in order to protect the fields s and t. Subsequent words which follow the CRC word c, contain the above-mentioned WATM cells.

Fig. 2(c) shows the WATM control cells which are carried by the Control section of Fig. 2(a) and which are 8 bytes long and include a header (4 bytes), a body (2 bytes), and a two byte cyclic Redundancy Check (CRC-16) part. The Control cells are interpreted by the DLC (Data Link Control) and MAC (Media Access Control) protocols for transmission control.

Fig. 2(d) shows Data cells which are carried in the ABR, VBR, and CBR Sub-Frame sections of Fig. 2(a). Each Data cells is 56 bytes long and include a header (6 bytes), a body (48 bytes), and a two byte CRC-16 part.

In the uplink direction, Mobile stations assemble information into the cells as the uplink of fig 2(a) in a manner similar to the Base station.

Turning to Fig. 1, there it shows two mobile stations 110, on a wireless ATM network 102 communication with a base station 108 which is co-resident on wired ATM network 104. Specifically, and as shown in this Figure, the two Mobile stations 110, share a common uplink.

At this point, understanding the functionality of the WATM network 102 is essential in order to identify the requirements to implement Base and Mobile stations 108 and 110. Importantly, and according to the teachings of the present invention, by carefully merging common functions at the Base and Mobile, it is possible to obtain a generic WATM NIC 112 or 118 architecture which can be shared as a building component.

### Base Station 108

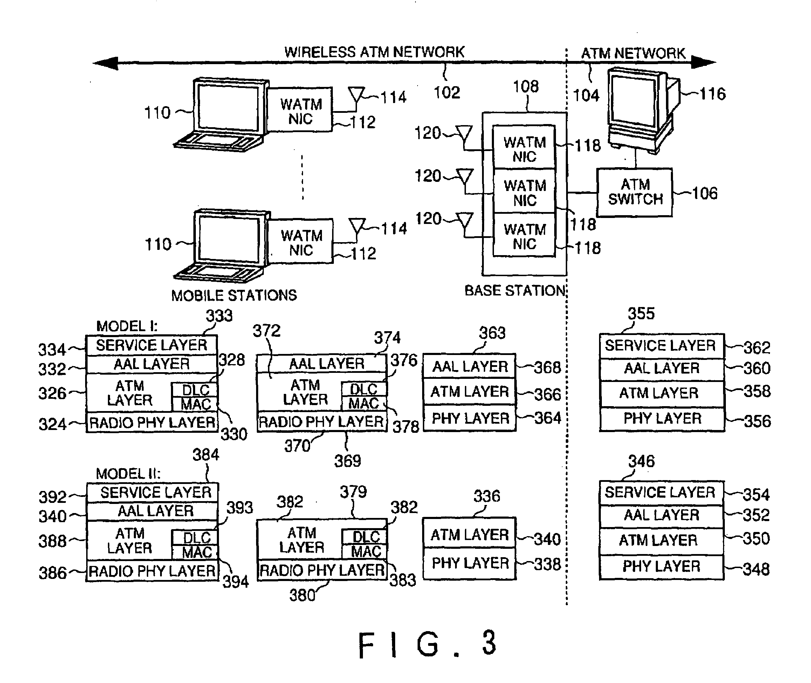

The Base station 108 provides an interface for ATM networks 104 to access the WATM network 102. With reference now to Fig. 3, the Base station 108 may advantageously be integrated with a number of WATM NICs 118, where each NIC 118 serves a predetermined wireless cell area. Two different approaches can be taken in the design of the Base station 108. A possible architectural model scenario is to terminate AAL (ATM Adaptation layer) layer 368, at the Base 108, as in Model I. This approach provided a reliable transfer of information at the AAL layer between the ATM network 104 and the base 108. In the event that incomplete Protocol data units (PDU) occur at the Base 108 due to ATM cell losses, these cells are retransmitted between the Base 108 and the ATM network 104 only. Importantly, ATM network 104 errors will not propagate in the wireless network and will not result in wasted bandwidth. The design of a base station 108 as a network terminator requires large amounts of memory for data storage and could result in an expensive implementation. However, data storage increases the transmission latency of PDUs having no transmission errors, thereby creating a negative impact on the performance of the overall system.

Alternatively, the Base station 108 may relay ATM cells to the wireless network. as depicted in Model II shown in Fig. 3. With this approach, the Base station 108 does not perform any AAL protocol functions, and data storage is only required to support the DLC protocol at the WATM cell level. As can be appreciated, the only ATM layer functions required are cell delineation and ATM header compression, which may be used in instances where not all ATM header bits are required by the WATM network. Even though ATM cell relaying may waste some wireless bandwidth due to PDU retransmission, nevertheless it simplifies the Base implementation and cost, and reduces any cell transmission latency.

### Mobile Station 110

The Mobile station 110 provides end users of the wireless network with access to that wireless network. As shown in fig. 3, the mobile station 110 implements all WATM transfer protocol layers 333 and 384 in both model I and Model II, respectively. In WATMnet 102, a significant difference between the base station 108 and the mobile stations 110 is at the MAC protocol layer (383, 394). Specifically, Mobile stations (slaves) 110 follow MAC control orders that are centrally processed at the Base station (master) and also support a Service layer 334 which provides an interface to end-users.

### WATM NIC Architecture

The design of any WATM NIC architecture must take into consideration any hardware/software functional partitioning in order to obtain a flexible, high-performance adapter. Flexibility allows for easy upgrading and is an important characteristic of a NIC because WATM protocols are still evolving. As standards evolve and mature, however, well-defined functions can then migrate into dedicated software or hardware building blocks. Similarly, high-performance is required to guarantee a certain Quality of Service (QOS) for high-speed multimedia applications. Additionally, a high-throughput architecture advantageously makes use of limited bandwidth wireless media.

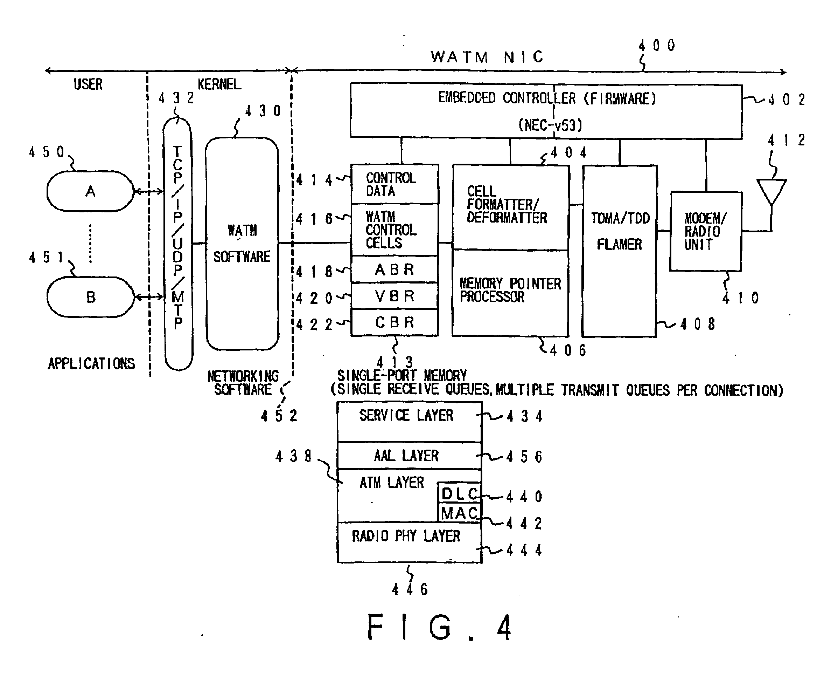

Such a flexible, high-performance NIC is obtained according to the present invention by appropriately partitioning functions in software (either at the Host or at an embedded controller), and in hardware such as Field Programmable Gate Arrays (FPGA). On such implementation is the WATMnet NIC 400 shown in Fig. 4 which supports three traffic classes: ABR, CBR, and VBR. As stated previously, other traffic classes may be advantageously supported as well, i.e., UBR. And while the block diagram of Fig. 4 depicts a Mobile NIC, those skilled in the art can quickly recognize that the same architecture can be used at the Base station by implementing functions particular to the Base station. For purposes of this discussion, layers of the reference architecture 446 are shaded identically to blocks in the NIC architecture where those respective layer functions are performed.

With further reference now to Fig. 4, multimedia applications 450 and 451, running under any one of a variety of well-known operating systems, interface with a Host kernel to access networking software such as Transmission Control Protocol/Internet Protocol (TCP/IP), User Datagram Protocol (UDP), or Multimedia transport Protocol (MTP), 432. As is known in the art, TCP/IP is often used and well suited for applications which do not require real time performance. However, in order to support real-time traffic such as CBR or VBR, other protocols such as MTP must be supported at the Mobile as well.

When messages are transmitted from the NIC over a wireless ATM network, PDUs are first processed by the WATM Software 430, which implement the functions of AAL layer 436 and ATM layer 438, in a multitasking environment. The requirement that the ATM layer generates check data for CRC-16 on a per WATM cell is advantageously provided in hardware by the cell Formattar/Deformatter 404. In a preferred embodiment, the DLC sublayer 440 is also implemented in the WATM Software and operates on each WATM cell on a per connection basis. The DLC protocol manages Host local memory containing WATM cells and keeps track of transmitted cells and frees memory space when receiving DLC control acknowledgements.

Similarly, the MAC layer 442 is also partially implemented in the WATM Software block 430 and it is responsible for transferring WATM data cells single-port memory 413 as NIC memory block. A Host API (Application Programming Interface) 452, communicates with an Embedded Controller 402 within the NIC which facilitates the transfer of cells. Those skilled in the art will quickly recognize that one of many commercially available microcontrollers such as the NEC v53 microprocessor may be used to provide embedded controller functions such as WATM NIC system initialization and WATM Cell Queue Management.

WATM cell Queue management is implemented in local memory 413, having different size queues, which are allocated to each active connection. Memory Pointer Processor module 406 complements the firmware contained within the microcontroller 402 thereby supporting WATM Cell Queue Management. As preferably used, the Memory Pointer Processor 406 offloads the microcontroller 402 thereby relieving the microcontroller 402 from data movement functions. A TDMA/TDD Framer 408, controls the transmission of WATM cells into a proper TDMA slot.

When downlink frames are received by the WATM NIC, they are synchronized and delineated at the TDMA/TDD Framer 408. When a WATM control or data cell is received, the microcontroller 402 is notified and the "type" bits contained in the received Frame's Section Frame header. The "type" bits are then used by the microcontroller to inform the Memory Pointer Processor which Memory locations within memory 413 where incoming WATM cells are to be stored. Advantageously, the incoming WATM cells are stored in a FIFO (First-In First-Out) manner. in a preferred embodiment, the receiver supports four different receive FIFO queue - one for each traffic class, namely, Control, ABR, VBR, and CBR as well as others such as UBR.

While WATM cells are stored in the memory, a CRC-16 checking is performed by the Cell Formatter/Deformatter 404. In the Cell Formatter/Deformatter 404, check data for a CRC is attached to each cell that is to be interpreted by the Host WATM Software 430. Advantageously, cells having errors as determined by a CRC check are dropped or processed as appropriate. This is of particular importance in applications supporting bit errors such as CBR voice or video where it might not be necessary to drop entire WATM cells. Importantly, the cell formatter/deformatter 404 is variable and programmable and advantageously distinguishes between control and data. Consequently the cell formatter/deformatter 404 is able to append control and data CRC as appropriate.

When WATM cells are stored in their respectively queues, an interrupt signal is generated and sent to a host (not shown) indicating that information is available. In a preferred embodiment, the Host implements a queue control methodology which determines the order in which data is to be moved into the Host. As an example, CBR data can be given priority over ABR data. A ell demultiplexing function is implemented in WATM Software 430 to route information to a proper DLF protocol software task. All other required receive functions such as header processing/decompression, and ATM AAL layers may also be advantageously implemented in software.

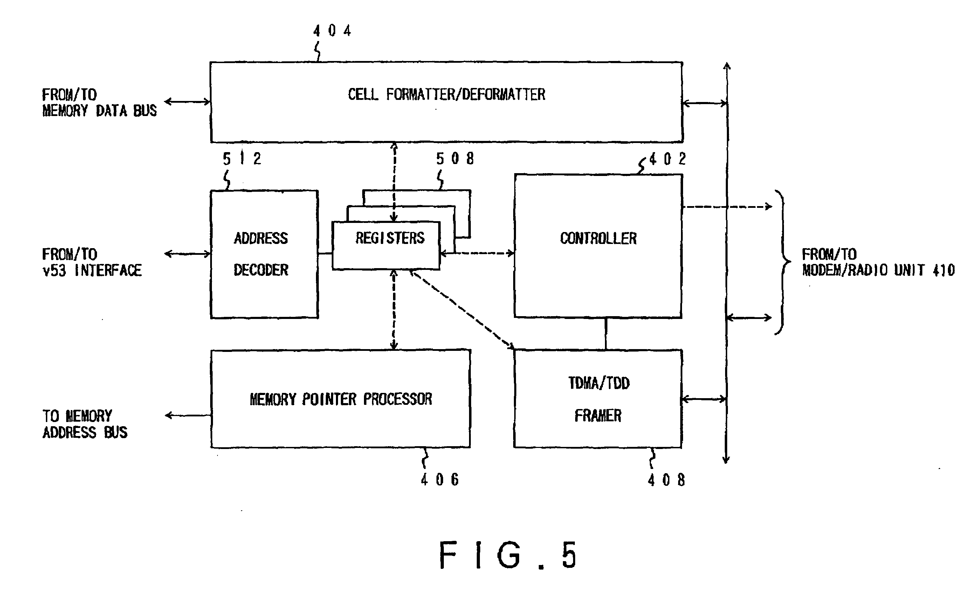

Fig. 5 shows a block diagram of the NIC hardware according to the present invention. The NEC v53 microcontroller Interface is connected to registers 508 through an address decoder 512 and is used to set up and interpret the contents of the registers 508. The contents of the registers 508 control the functions of all of the other components in the hardware (shown with dotted lines).

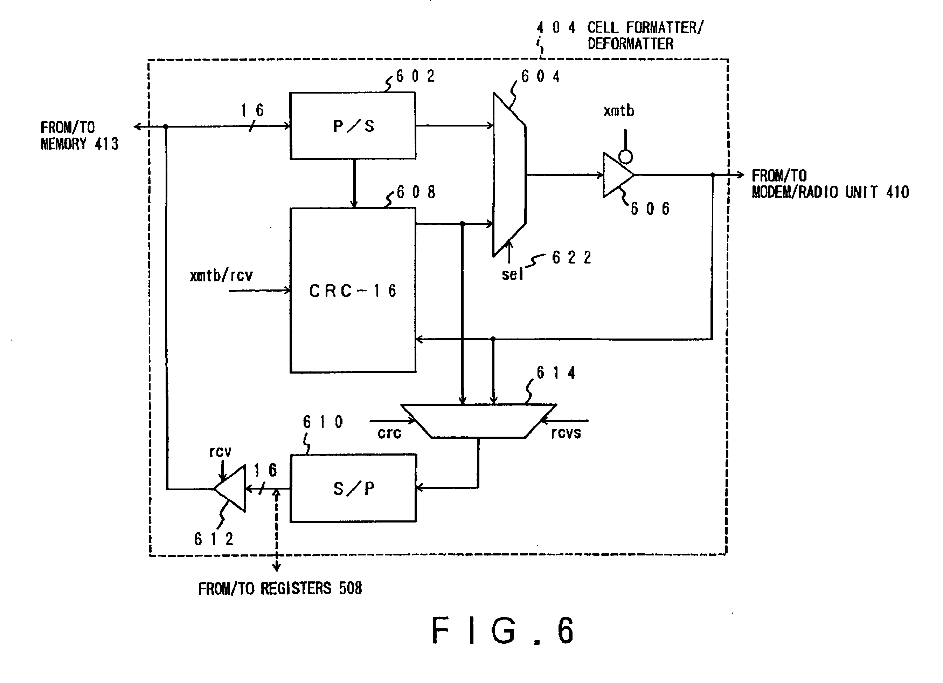

With reference now to Fig. 6, there is shown a detailed view of the Cell formatter/deformatter 404. The cell formatter/Deformatter 404 is preferably implemented as a half-duplex circuit, which may advantageously share hardware components for both transmission and reception of ATM cells. A circuit 606 is enabled to permit an input signal to pass through when a signal designated "xmtb" represents a transmission mode of the Cell formatter/Deformatter 404 by a logic "1" level. When the signal "xmtb" represents a reception mode of the Cell Formatter/Deformatter 404 by a logic "0" level, the circuit 404 is disabled to shut out the input signal. In the transmission mode, data from memory 413 is read on a word basis, and it is latched in the Parallel-to-Serial (P/S) converter 602. The P/S converter 602 converts parallel data into serial data. The serial data is transferred towards the MODEM/RADIO unit 410 through a multiplexer 604 controlled by signal "sel" and through the circuit 606. CRC-16 block 608 generates the check data for CRC-16 from the serial data as an error control code. The check data are attached at the end of each WATM cell as it propagates to the MODEM/Radio unit 410 through the Cell Formatter/Deformatter 404.

When the Cell Formatter/Deformatter 404 is in the receive mode, the "xmtb" signal is disabled (the logic "0" level) while the "rcv" and "rcvs" signals are enabled (the logic "1" level). The serial data, received from the MODEM/Radio unit 410 is multiplexed by multiplexer 614 and then fed to to Serial-to-Parallel (S/P) converter 610. When the "rev" signal is enabled (logic "1"), the CRC-16 block 608 receives the serial data from the MODEM/Radio unit 410 and generates a CRC value which should be attached to each incoming cell. When the "crc" signal is enabled (logic "1") and the "rcvs" signal is disabled (logic "0"), a multiplexer 614 attaches the CRC value to the serial data received from the MODEM/Radio unit 410. The S/P converter 610 converts the serial data attached the CRC value into parallel data which is delivered to the memory 413 through a circuit 612. Incoming subframe type information, such as the WATM cell VCI (Virtual Channel Identifier) is provided to the microcontroller 402 (Fig. 5) through the registers 508 for interpretation by the queue Management firmware.

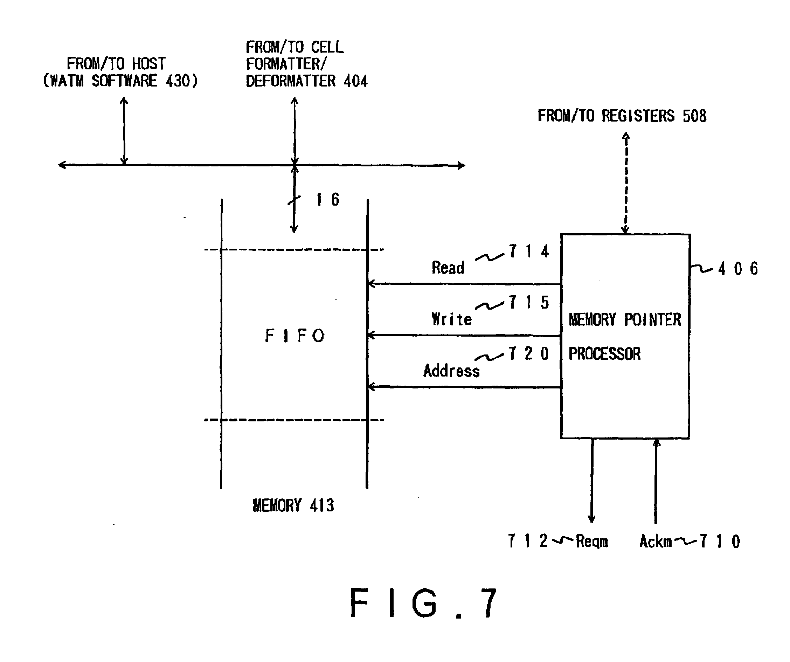

Fig. 7 is a block diagram showing queue management at the NIC which includes a Memory Pinter Processor 406. Memory Pointer generation and management is performed within the microcontroller 402 (Figs. 4 and 5) whenever information is read from or written to the Memory 413. The microcontroller 402 maintains queue management memory parameters such as a read queue (rq) pointer, write queue (wq) pointer, FIFO size (sz), and offset address (oa) pointer. These values are advantageously processed in hardware thereby implementing virtual FIFO queues in the Memory 413. The Memory Pointer Processor 406 accesses the Memory 413 by requesting bus control to the Controller 402 by asserting a request memory ("Reqm") signal 712. The "Reqm" signal is required to permit sharing access to the Memory 413 by the Host (the WATM software 430 of Fig. 4), the microcontroller 402, and the Cell Formatter/Deformatter 404.

Upon receipt of an "Ackm" signal 710 by the Memory Pinter Processor 406, Cell Formatter/Deformater data can be read or written under the control of the Memory Pointer Processor 406. The Memory Pointer Processor 406 generates any "Read", "Write", and "Address" signals 716, 718, and 720 necessary to reference memory locations within the Memory 413. At the end of a transmit or receive data period, "rq", "wq", "sz" and "oa" values are updated and provided to the microcontroller 402 in a software structure for each connection. When the Memory Pointer Processor 406 is finished with its operation, the "Reqm" signal 712 is disabled.

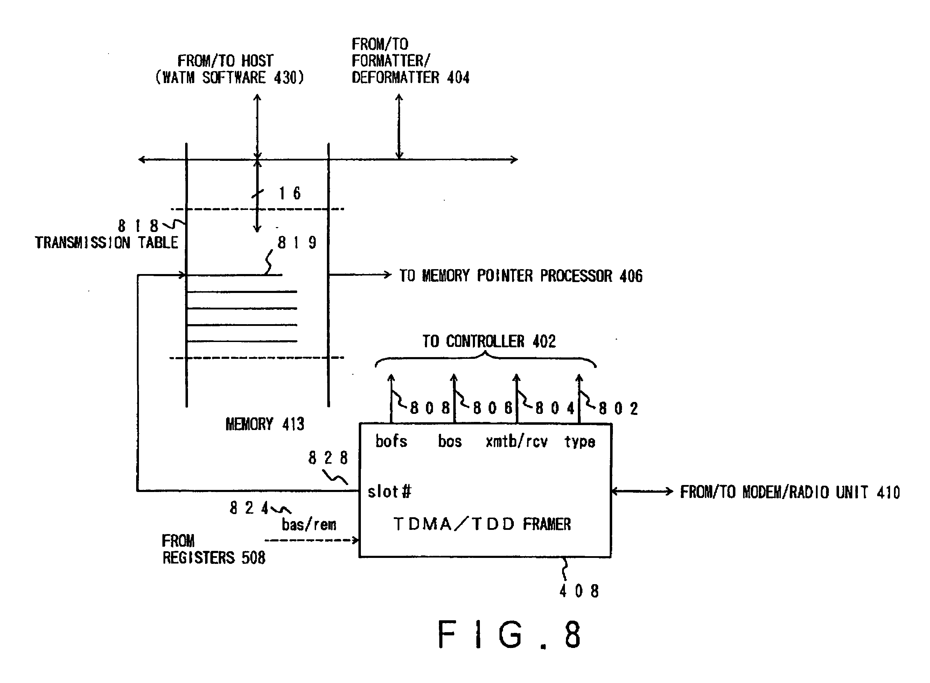

With reference now to Fig. 8, there it shows TDMA/TDD Framer 408 which delineates the Radio Physical layer as described previously. The TDMA/TDD Framer 408 is configured according to a state of the base/remote ("bas/rem") signal 824 through the Register 508 thereby establishing operation as either a Base or Mobile (also known as Remote) station, accordingly. When the Framer 408 is in the Base station mode, a beginning of frame slot ("bofs") signal 808 indicates to the controller 402 to insert the preamble P (Fig. 2(a)) starting at a first TDMA slot location.

All transmissions, whether occurring at a base or Mobile, make use of a transmission table 818 contained in the memory 413. In a preferred embodiment, the transmission table 818 consists of 250 entries 819, each one of which represents a corresponding slot in a TDMA frame. Memory pointers at each Memory location are accessed by a "slot #" signal 828 generated by the Framer 408. Each Memory pointer indicates a particular location to read and transmit. The pointers are passed to and processed by the Memory pointer Processor 406 to emulate FIFO functionality. A beginning of slot ("bos") signal 806 indicates the beginning of slot within the TDMA frame. The Framer 408 also generates a transmit/receive ("xmtb/rcv") signal 804 and a "type" signal 802. The transmit/receive ("xmtb/rcv") signal 804 is the same as the one used in the Cell Formatter/Deformatter 404 of Fig. 6. It indicates the TDD functionality of the Frame by delineating the boundaries of the transmit or receive payload. The signal from the Section frame indicates to the Controller 402 whether the WATM Control Cell (8 bytes) or the Data (56 bytes) should processed by the NIC.

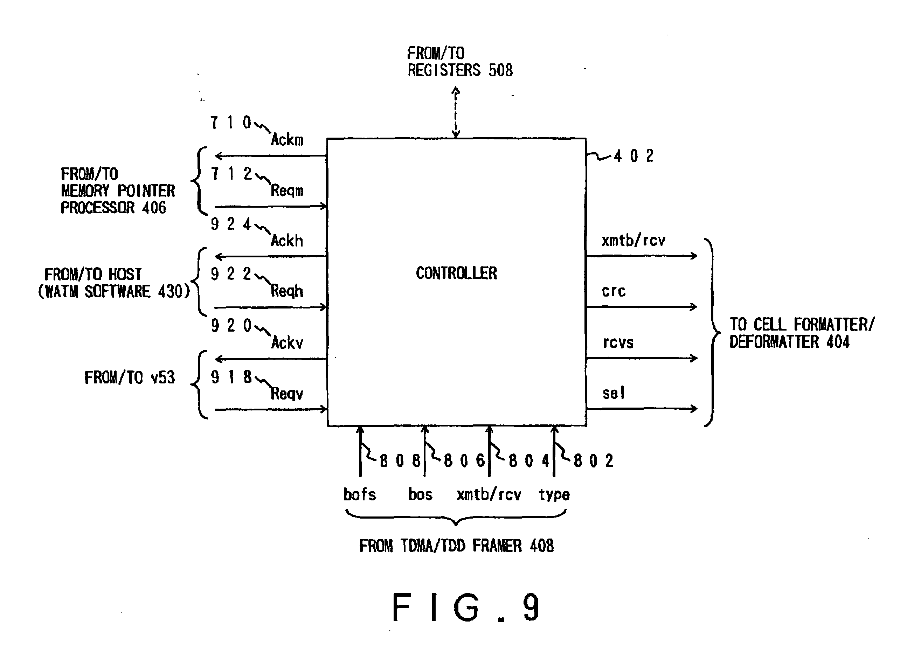

Fig. 9 shows a simplified block diagram of Controller 402 and its generalized interfaces. The controller 402 implements Finite State machines which manage the hardware components previously described. A " Reqh" signal 922 and a "Reqv" signal 918 are equivalent to the "Reqm" signal 712 described previously. An "Ackh" signal 924 and an "Ackv" signal 920 are equivalent to the "Ackm" signal 710 described previously. The Controller 402 arbitrates the priority for accessing the Memory 413 by interpreting request signals and generating a proper acknowledgment.

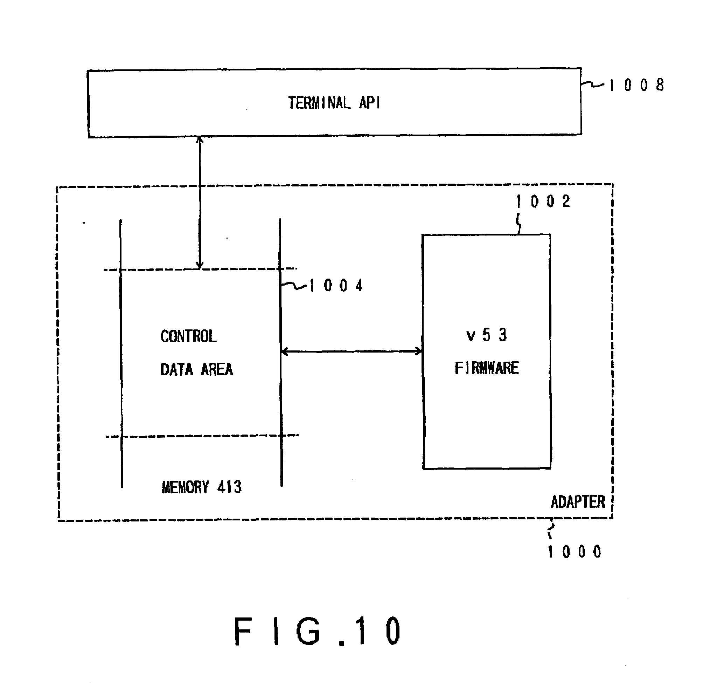

As previously stated, the hardware/software partitioning of the WATM NIC plays an important role in determining whether the NIC is capable of providing a high-throughput end-to-end performance. In a preferred embodiment, Control software in the WATMnet NIC has been partitioned as shown in Fig. 10. A Host computer interfaces to the NIC (Adapter 1000) through a terminal API (Application program Interface) 1008, which advantageously hides the hardware complexity and consists of a number of functional calls. Firmware within microcontroller 402 (Fig. 4) interacts with the terminal API 1008 through Memory 413 to perform hardware control and to support the NIC's functionality.

The terminal API 1008 performs operations which allows the Host to transfer and retrieve information from the NIC. the following are some of the important functions handled by the API: Adapter Initialization, Connection Setup, Data transmission, Data Reception. When NIC Adapter 1000 is connected to a Host via suitable interface, i.e., PCMCIA, the API allows the downloading of configuration data for the mlcrocontroller 402 and the on-board Field Programmable Gate Arrays (FPGAs). The microcontroller 402 begins execution of firmware code by initializing the Registers 508 (Fig. 5) and by setting up the Control, ABR, VBR, CBR and other (UBR) queues for data reception. One the NIC Adapter card is ready for data processing, the microcontroller 402 notifies the Host that the wireless network is ready for access through the Control Data area 1004 in the Memory 413.

Before transmission or reception of data, a connection setup must occur. Specifically, the API is first used by the host to create a transmit CBR queue by requesting a queue from the microcontroller 402. Once a CBR queue has been created, WATM meta-signaling connection request messages can be sent to the WATM network. A Base will wait for meta-signaling packets coming from Mobile stations, while Mobile stations will wait for meta-signaling packets from the ATM network. The ATM network will allocate signaling VCIs (Virtual Channel Identifiers) and await for service connections setup from the ATM or WATM networks.

Upon a service connection request, the API provides three function calls to allocate ABR, VBR, or CBR queues. ABR queues have lower priority and can be allocated to any transmission slot based on the MAC. A CBR queue has a fixed size queue and slot allocation. Once it is setup, it does not have to be controlled by the MAC until the end of the connection. A VBR queue is flexible in terms of buffer size and also has a fixed slot allocation.

Once buffer queues have been allocated, the information can be transferred in or out of the NIC. The API also offers support for tearing down connections by de-allocating buffer space. De-allocated buffer space is subsequently returned to a Queue Management firmware process running in the microcontroller.

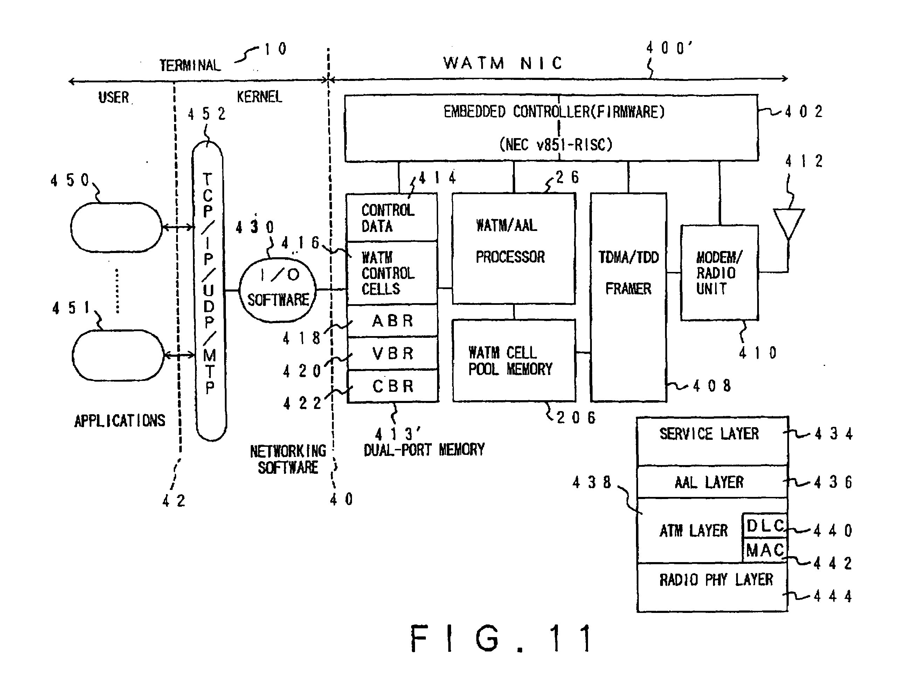

Referring to Fig. 11, a block diagram is shown of a Wireless Network Interface Card (WATMNIC) 400' according to the present invention for communications between a client terminal 10 and a wireless Asynchronous Transfer Mode Network.

The terminal 10 comprises similar parts designated by like reference numerals. An I/O (Input/Output) software 430 of the terminal 10 of Fig. 11 had a function substantially equivalent to the WATM software 430 of Fig. 4.

The WATMNIC 400' of Fig. 11 is similar to the WATMNIC 400 of Fig. 4 except that a Dual-Port memory 413' achieves a function of the single-port memory 413 and that a combination of a WATM/AAL processor 26 and a WATM Cell Pool memory 206 achieves functions of the cell formatter/deformatter 404 and the memory pointer processor 406 in Fig. 4. Although the Controller 402 of the WATMNIC 400' of Fig. 11 uses an NEC v851 RISC microprocessor instead of the NEC v53 microprocessor used in the controller 402 of the WATMNIC 400 of Fig. 4, functions which are necessary in the controller 402 in putting this invention into practice, can be achieved by the use of the NEC v851 RISC microprocessor in the manner similar to the case using the NEC v53 microprocessor.

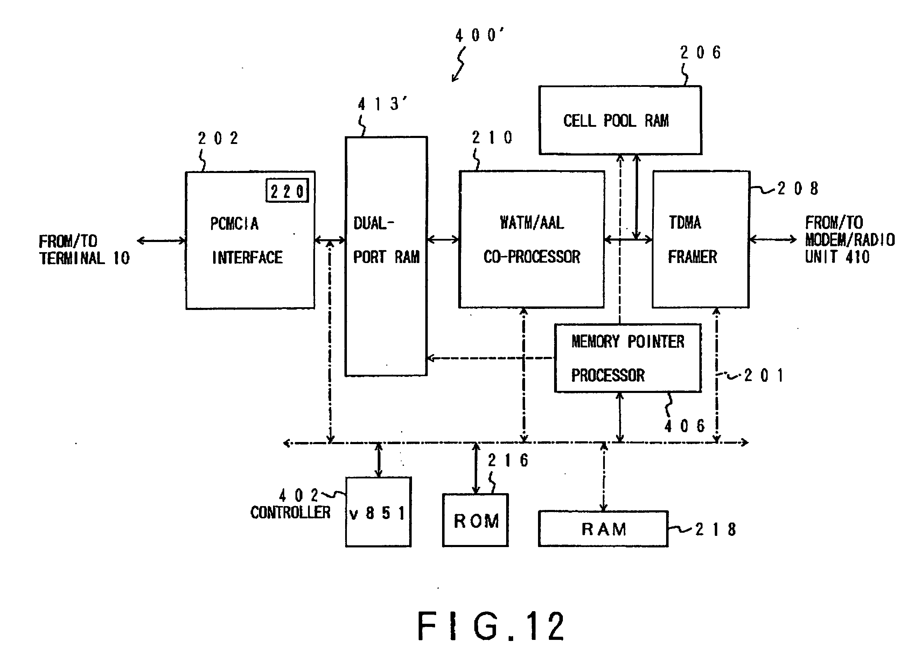

With reference now to Fig. 12, there it shows a block diagram of details of the Network Interface Card (NIC) 400' according to the present invention. The NIC 400' comprises similar parts designated by reference numerals. That is, the NIC 400' comprises PCMCIA interface 202, Dual-Port RAM (Random Access Memory) 413', WATM/AAL co-processor 210, Cell Pool Ram 206, TDMA Framer 208, Memory Pointer Processor 406, RAM 218, ROM (Read-Only Memory) 216 and v-851 Microcontroller 402 each interconnected via electrical and mechanical interconnect (local bus) 201. Those skilled in the art will quickly recognize that a variety of commercially available components may be selected for any of the above functional blocks. In Fig. 12, the TDMA framer 208 corresponds to the TDMA/TDD framer 408. A combination of WATM/AAL co-processor 210 and the memory pointer processor 406 correspond to the WATM/AAL co-processor 26.

The PCMCIA Interface 202 is preferably implemented using a commercially available integrated circuit (IC) which supports the PCMCIA version 2.1 standard. Through the PCMCIA interface 202, Terminal (equipment) 10 accesses the Dual-Port RAM 413', in a PCMCIA Common Memory configuration, to move data in and out of the NIC 400'. Access to the Dual-Port RAM 413' is shared with the Microcontroller 214 (i.e., v851 RISC processor) under the control of an arbiter 200, implemented within the PCMCIA interface 202. The arbiter 220 gives higher access priority to the Microcontroller 402, which also maps its memory space to access the Dual-port RAM 413'. Through the Dual-Port RAM 413', Terminal equipment 10 communicates with the network, and also exchanges information with the Microcontroller 402. Similarly, the Microcontroller 402 can also exchange data with the network. This architecture allows to implement functions such as ATM signaling on board the NIC.

The Dual-Port RAM 413' allows the decoupling of a terminal and network side of the NIC 400'. in this configuration, the NIC throughput performance is improved by allowing the transfer of data from terminal equipment of Microcontroller 402 to the memory 413' to occur while the network side simultaneously stores incoming data.

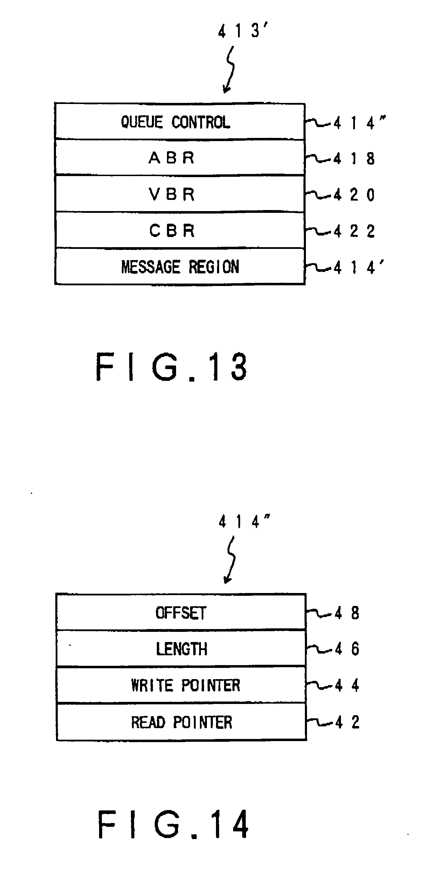

The Dual-Port RAM 413' is partitioned in different regions as shown in Fig. 13. The Message region 414' allows for the exchange of control messages between the Terminal Equipment 10 and the Microcontroller 402, and between the Microcontroller 402 and the wireless network. The ABR region 418, the VBR region 420, and the CBR region 422 implement a First In-First out (FIFO) functionality to buffer the wireless traffic. Two FIFO's are incorporated per traffic class, one in the transmit direction and one in the receive direction. The Queue Control region 414'' contains data structures to accomplish the FIFO functionality of the ABR, VBR, CBR, UBR, and Message regions 418, 420, 422, and 414''. Those skilled in the art will quickly recognize that there can be many buffers contained within a region.

Fig. 14 shows data structure of the Queue Control Region 414''. This region 414'' consists of data structure required to achieve FIFO functionality of the ABR, VBR, CBR, and Message regions. The Offset parameter 48 indicates the start address of the FIFO in the RAM space. The Length parameter 46 indicates the size of the FIFO being implemented. The Write Pointer 44 stores the distance value from the Offset where data is stored. The Read Pointer 42 is used in combination with the Offset parameter to indicate where data is to be retrieved from.

Whenever the Write and Read pointers are of equal value, the FIFO is empty. If the Write pointer starts catching up with the Read Pointer after a number of writes, the FIFO is considered full if the Write Pointer plus one is equal to the Read Pointer. When a FIFO is full, incoming data is dropped. The values of the Write and Read pointers are always reset to zero when either pointer reaches the value of the Length parameter, effectively creating a circular buffer. FIFO occupancy can be determined by using the Length, Write and Read pointers. If the Write pointer value is greater than the read Pointer, then the FIFO occupancy is determined by the difference between the write and Read pointer values. Otherwise, the occupancy is determined by subtracting from the Length, the value of the difference between the Read and Write pointers.

FIFO functionality is implemented in each of the ABR, CBR and VBR regions to store and retrieve data. The ABR region stores Available Bit Rate data, the VBR stores Variable Bit Rate data, and the CBR region stores Constant Bit Rate data. Preferably, two FIFOs are implemented per region, one in the transmit direction and one in the receive direction. For each direction, a FIFO utilizes the structures previously described.

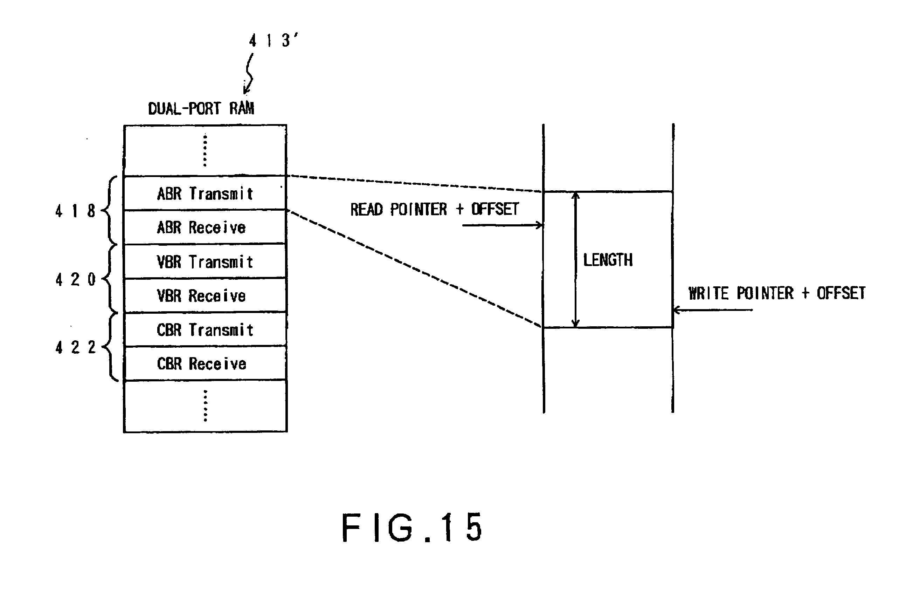

Fig. 15 shows an example of how FIFOs are implemented by partitioning the Dual-Port RAM 413'. In this scheme, different FIFO sizes, based on the traffic class buffering requirements, can be obtained. By having different traffic class buffers, it is possible to implement a scheduling algorithm at the terminal 10 (Fig. 12) to optimize the movement of time-sensitive data through the PCMCIA interface 202 (Fig. 12). Otherwise, it is also possible to implement a single FIFO area for movement of data across the PCMCIA interface 202 to simplify the Terminal software implementation.

In Fig. 13, the message region 414' comprises four FIFOs. Two of the FIFOs provide for the storage of messages associated with terminal 10 (Fig. 12) to Microcontroller 402 (Fig. 12) communications, while the other two provide for the transfer of messages between the Microcontroller 402 and the wireless network. For example, before any connection can be established, the Microcontroller 402 will use two of the FIFOs to run ATM signaling software with the WATM network. Once a signaling VCI (Virtual Circuit Identifier) has been established, the Microcontroller 402 will communicate with the Terminal 10 thereby establishing connections in either the outgoing or incoming direction. When a terminal 10 requests to establish a connection, it will petition for permission to access the NIC resources through the Terminal 10 to Microcontroller FIFOs.

In Fig. 12, the WATM Co-processor 210 exhibits a pipeline architecture which allows for the flexible formatting of AAL 1, 3/4, and 5, as well as ATM, and WATM cells. The Co-processor architecture has been designed by identifying generic building blocks required in the implementation of the above named transfer protocols. The WATM AAL Co-processor 210 attaches to a main RISC CPU (in this case the v851) to relieve it from the burden of time-consuming operations by offering fast customized hardware processing. In general, the v851 keeps track of data structure on a per connection basis while data movement and formatting is performed by the Co-processor 210. In this manner, the v851 operating cycles are saved and can be effectively used to perform other functions.

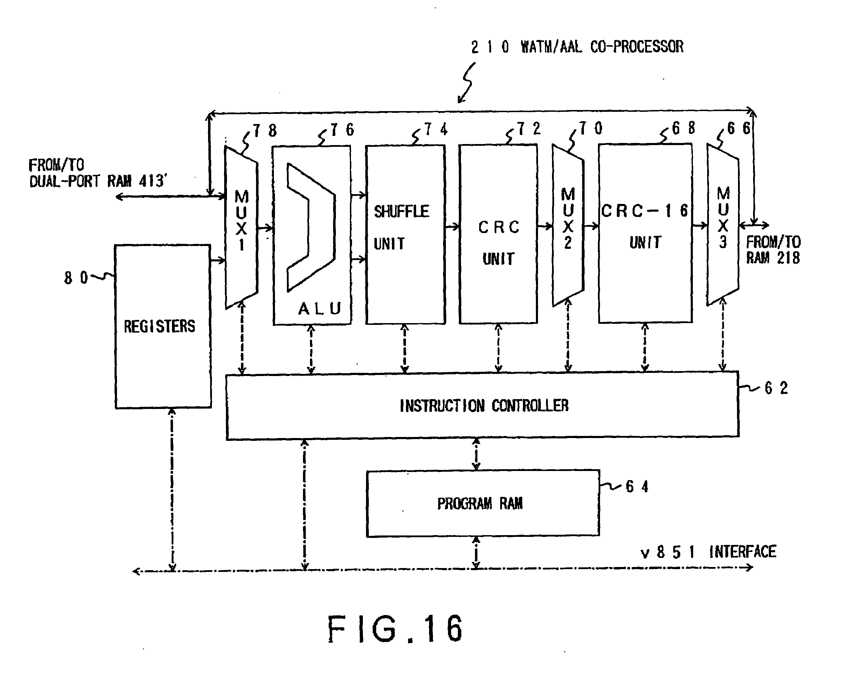

A block diagram of the Co-processor 210 is shown in Fig. 16. It comprises seven pipeline stages containing generic blocks (1st multiplexer 78, ALU (Arithmetic and Logic Unit) 76, shuffle unit 74, CRC unit 72, 2nd multiplexer 70, CRC-16 unit 68, and 3rd multiplexer 66) that can be effectively shared to obtain the formatting of the different AAL, ATM and WATM transport protocols. Preferably, the Co-processor 210 is memory mapped to the v851 controller 402 (Fig. 12) to control its operation. Sets of instructions implementing the AAL, ATM, and WATM protocols are stored in the Program RAM 64, where they are accessed and interpreted by the instruction Controller 62.

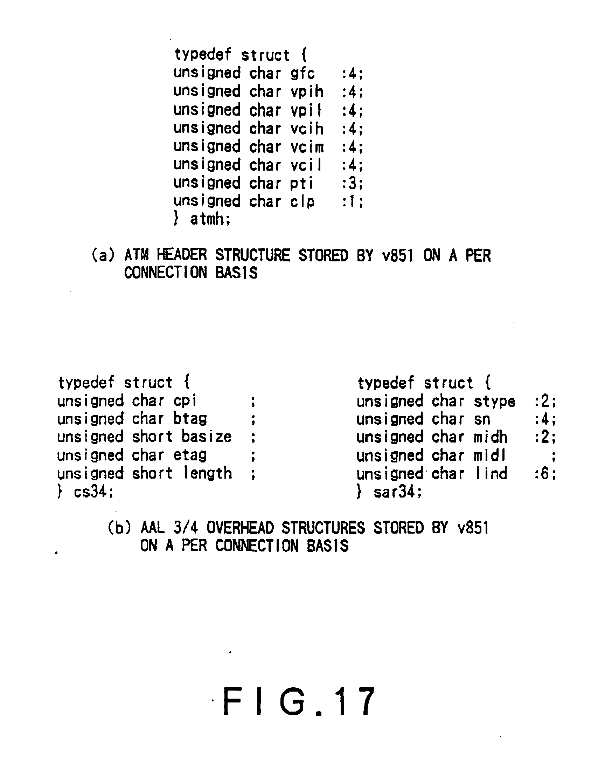

The registers 80 are accessed by the v851 controller 402 to insert protocol overhead data. The overhead data is stored in firmware structures within the v851 controller 402, With reference now to Fig. 17, there it shows C-language structures for an ATM header (atmh), AAL 3/4 convergence sublayer (cs34), and segmentation and reassemble sublayer overhead (sar34).

In Figs. 16 and 17, in a transmission scenario, the v851 controller 402 (Fig. 12) writes the contents of the software structures in the registers 80, and it then initiates the Instructions Controller 62 to start the desired protocol formatting program. At such time, the Co-processor 210 handles data movement and data formatting. No further involvement is required by the v851 controller 402. Thus, the v851 controller 402 is relieved of time-consuming operations and can be effectively used in other operations. When the Co-processor 210 is finished with its required instructions, the v851 data structures for a given connection can be updated with the values to be used in the next transmission cycle.

During data formatting, overhead is multiplexed by the first multiplexer MUX1 78 from the Registers 80 with data from the Dual-Port RAM 413' (Fig. 12) to form the desired overhead/data combination. The Co-processor incoming data is then circulated through the ALU stage 76 which performs operations such as adding one of increment Sequence Number (SN) overhead, or to perform comparison when SN are received from the network. Data is then operated on by the Shuffle unit stage 74, which performs dedicated AAL 1 and AAL3/4 bit shifting manipulations in one cycle time. Subsequently, within the CRC unit stage 72, specialized hardware implements CRC-3, CRC-8, CRC-10, and CRC 32 which operates simultaneously on the data continuously. When CRC check data has been calculated, it is then inserted through the multiplexer MUX2 70 at a location controlled by the Co-processor program. For Wireless ATM applications the CRC-16 unit 68 allows the generation of CRC overhead and attaches it to the data through the control of the third multiplexer MUX3 66. The output of MUX 3 is stored in the Cell Pool RAM 26 (Fig. 12) under the control of the Pinter Processor 406 (Fig. 12).

In Fig. 12, the Memory Pointer Processor (PP) 406 generates memory address locations where data is to be stored or retrieved by the satm AAL Co-processor 210 and by the TDMA framer 208. The PP 406 includes two parts, the first part (PP-I) controls the information writing or reading of the Dual-Port RAM 413' and the second part (PP-II) implements queue management of the Cell Pool RAM 206.

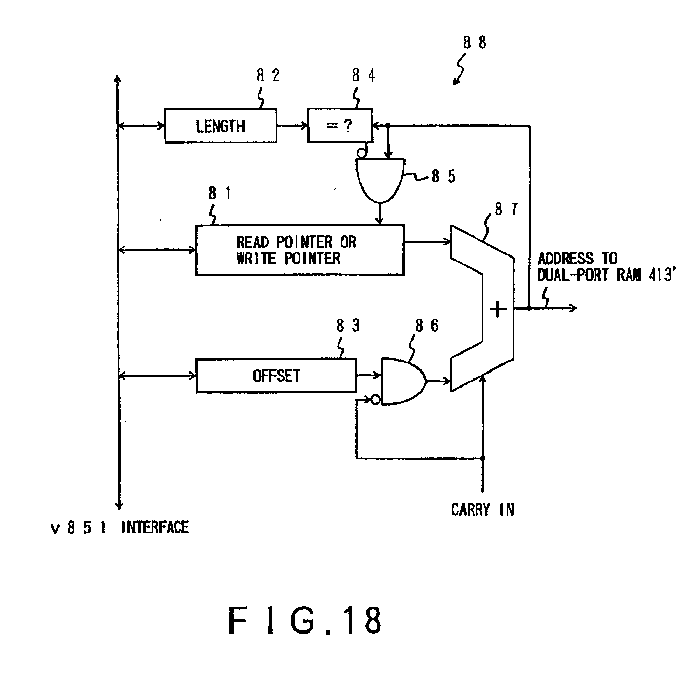

Fig. 18 shows an address generation of the first part (PP-I) 88 of the memory pointer processor 406. In Fig. 18, the address generator comprises internal registers 81, 82, and 83, a comparator 84, logic gates (inhibit gates) 85 and 86, and an adder 87. Through the v851 interface internal registers 81, 82, and 83 are loaded with the values contained within the Queue Control Region. In a store cycle, the Write pointer is used, while in the retrieve cycle the Read pointer is used. These pointers are incremented by one by the "Carry In" signal. The Length value is compared with the adder output in the comparator 84 to rollover the Read or Write pointers to zero whenever the FIFO length is reached. In this manner, a circular queue functionality is effectively achieved. By adding the read or Write pointers to the Offset value in the adder 87, the address where data is to be stored or retrieved at the Dual-Port RAM 413' is obtained. After a write or read cycle is finished, the v851 retrieves the new Write or Read pointers and updates the Queue control structure for later use.

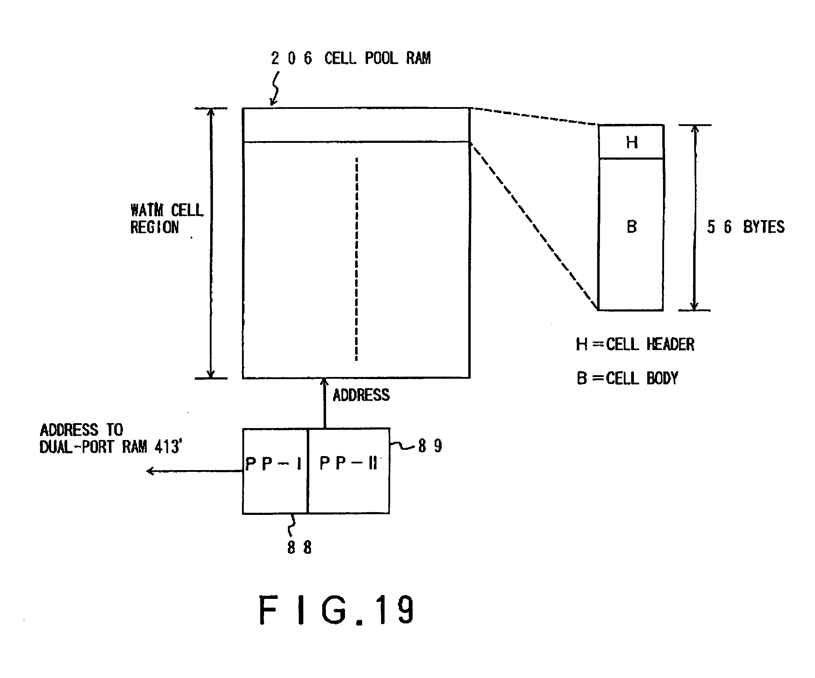

In Fig. 12, the second part (PP-II) (later illustrated by a reference numeral 89 in Fig. 19 of the memory pointer processor (PP)) generates the memory address locations for the cell Pool RAM 206. The second part (PP-II) 89 provides queue management control on a per connection basis, while also providing functionality that is required to support the DLC protocol.

As shown in Fig. 19, the Cell Pool RAM 206 is partitioned. The WATM cell region of the Cell Pool RAM 206 is partitioned into a number of 56 byte regions, each region having a header H and a cell body B and which serve to store WATM cells in the transmit and receive directions. WATM cells can then be linked by managing pointers using the following technique that merge FIFO queue Management and DLC operation requirements in a single novel architecture.

Advantageously, ATM queue management and DLC is merged in such a manner as to support virtual queues on a per connection basis with the capabilities of WATM cell retransmission and cell reordering.

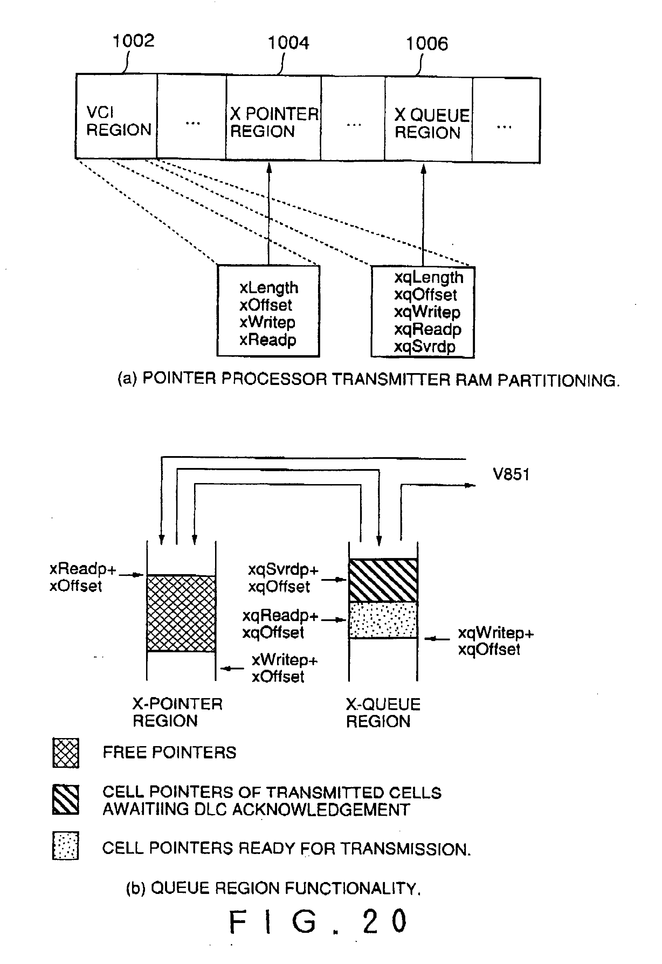

With reference now to Fig. 20(a), there it shows the partitioning of RAM residing within the memory pointer processor 406 shown in Fig. 12 in the transmit direction. In the RAM, a VCI region 102 consists of data structure which permit the emulation of FIFO functionalities of the Xpointer region 1004 and Xqueue region 1006, respectively. The Xpointer region 1004 contains free start address pointers which indicate where WATM cells can be stored in the Cell Pool RAM 206 (Fig. 12). These pointers are stored in a FIFO manner using any of a variety of technique. The XQueue region 1006 contains the address pointers of stored cells in the Cell Pool RAM 206 (Fig. 12).

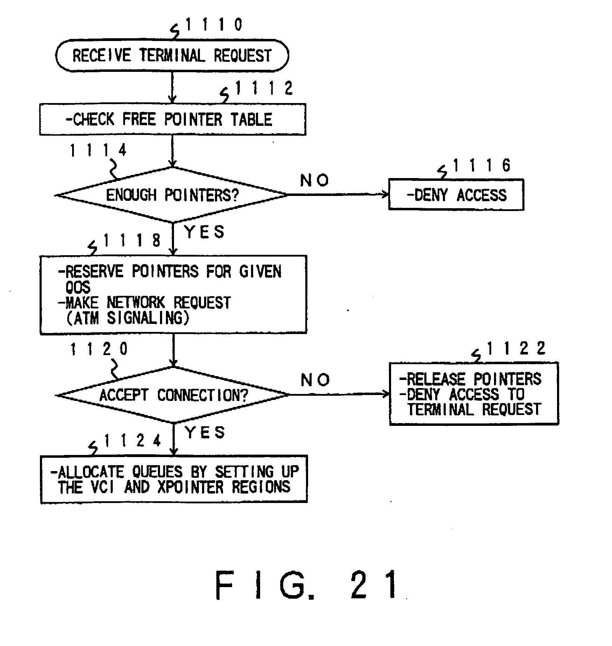

Fig. 20(b) shows the structure of the Xpointer region 1004 and XQueue region 1006. The size of the Xpointer region 1004 determined the queue size for a given connection based on its quality of service (QOS) requirements. A number of Address pointers which guarantees the required QOS is stored in this region. These pointers are referred to as Free pointers, and are initially managed within the v851. Upon connection setup request by the Terminal, the v851 is responsible for performing the operations shown in the flowchart of Fig. 21. A similar operation is also required to set up the received queue.

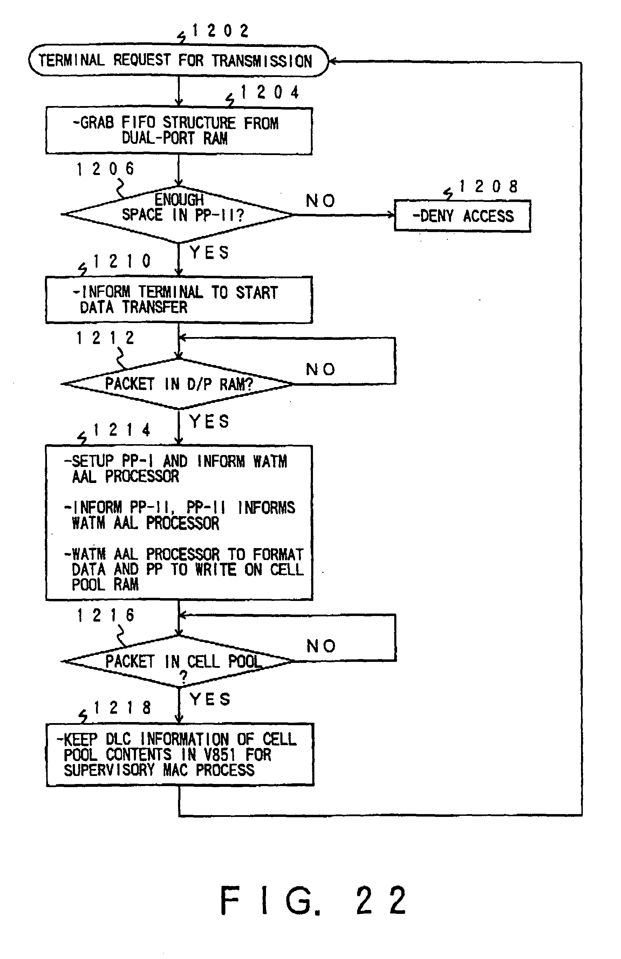

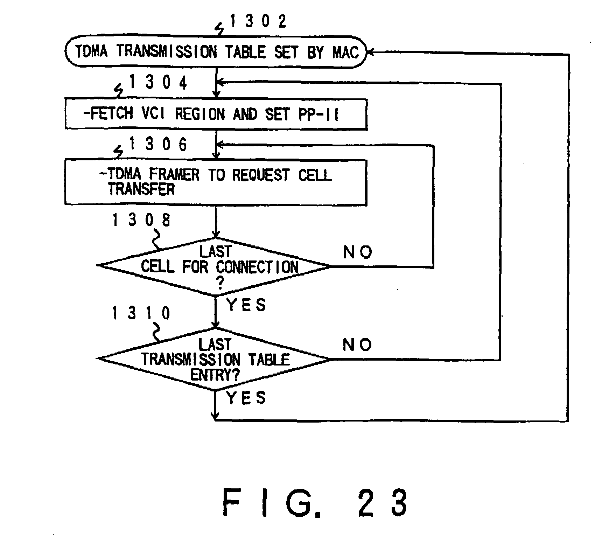

In Figs. 12 and 20, when a data transmission is made by the Terminal 10, the process depicted in the flowchart shown in Fig. 22 is performed thereby moving data through the dual-port RAM 413' to the Cell Pool RAM 206. A Free pointer in the Xpointer region 1004 (Fig. 20(b) is moved to the XQueue region when a cell has been written to the Cell Pool RAM 206. The X-Queue region 1006 implements the standard FIFO implementation. The "xqWritep" of Fig. 20 is incremented as WATM cells are stored in the Cell Pool RAM 206, while the "xqReadp" is decremented every time the TDMA framer 208 (Fig. 12), transmits data to the wireless network. The FIFO occupancy given by the "xqWritep" and "xqReadp" pointers is used by the supervisory MAC to determined how much data is to be transmitted. Fig. 23 shows the steps required to transmit WATM cells by the TDMA Framer.

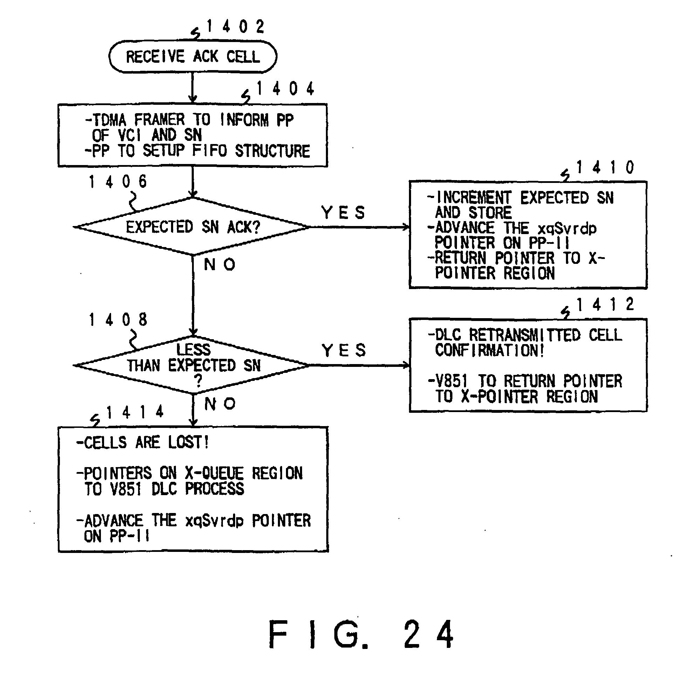

A "xqSvrdp" pointer is also part of the WQueue region 1004 and it is used by the DLC to keep track of cell retransmissions. Initially, the "xqSvrdp" and "xqReadp" pointers are at the same location. But, as the Framer 208 reads data, the "xqReadp" pointer advances, and the "xqSvrdp" value stays pointing at the first transmitted cell awaiting transmission acknowledgement. Fig. 24 shows the process required for DLC Acknowledgement to the NIC.

In summary, "xqSvrdp" is advanced every time a cell is acknowledged. If the acknowledgement matches the expected WATM cell, the XQueue region pointer returns to the Xpointer region 1004. Otherwise, the v851 is called upon to perform WATM cell retransmission and to control the Cell Pool pointer. The v851 returns the Cell Pool pointer to the Xpointer region 1004 when retransmission has successfully been accompanied, or at retransmission time-out.

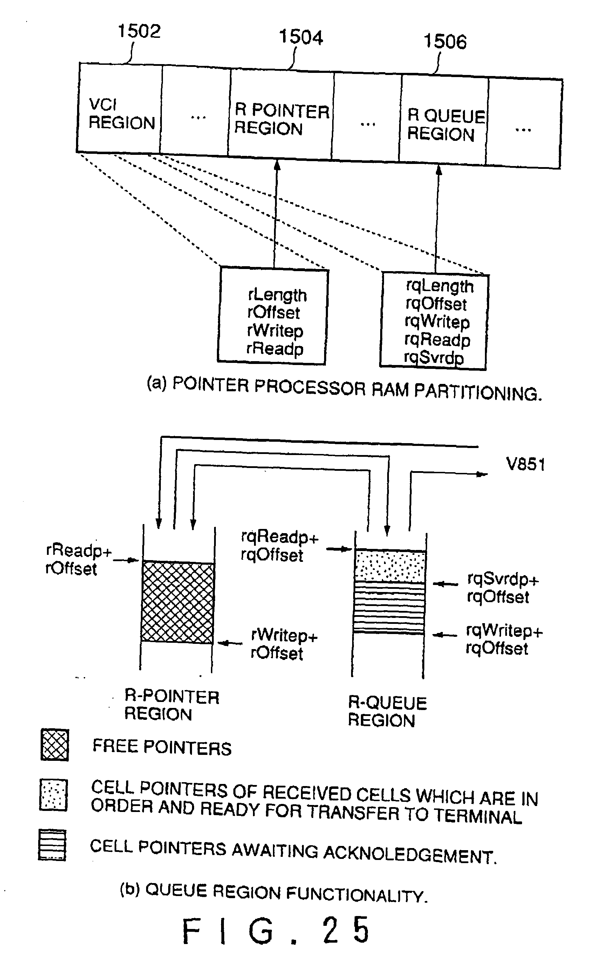

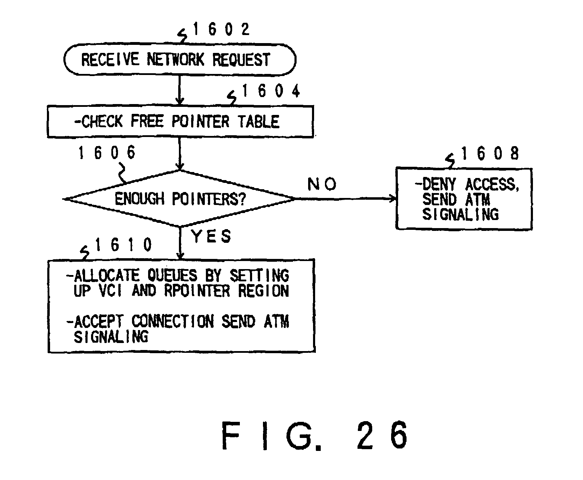

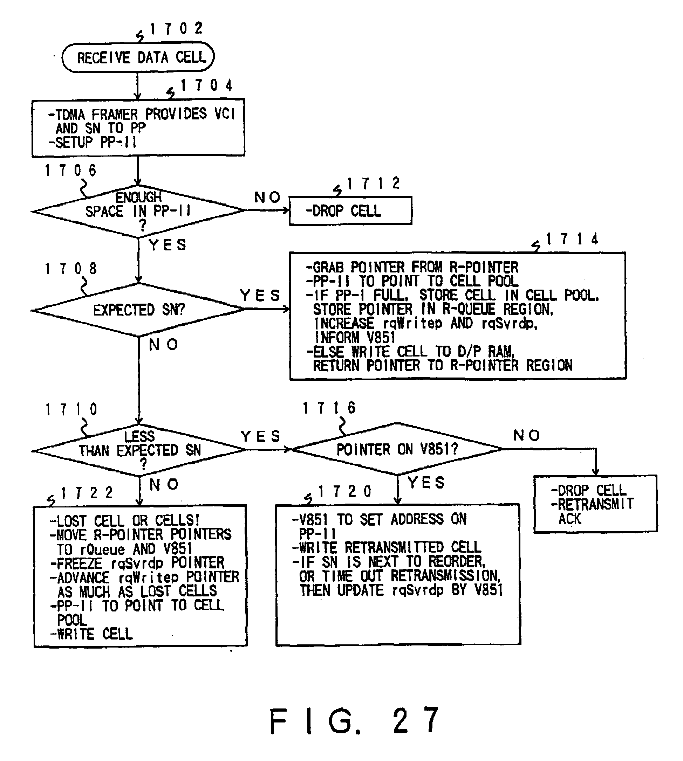

Fig. 25(a) shows a RAM structure of the memory pointer processor 406 (Fig. 13) in the receive direction. The VCI region 1502, previously described, includes data structures which implement the Rpointer region 1504 and Rqueue region 1506. The Rpointer region 1504 contains the free pointer to the Cell Pool RAM 206 (Fig. 12) and it is setup as shown in Fig. 26. An example of the Rpointer and Rqueue regions 1504 and 1506 is shown in Fig. 25(b). When WATM data cells are received, a free pointer is taken from the Rpointer region 1504. If no pointers are found the cell is dropped. Otherwise, the pointer is stored in the Rqueue region 1506. The " rqWritep" pointer is incremented when cells are received or whenever cell losses are detected by checking the SV value. When cells are lost, Free pointers to the Rqueue region 1506 should be proportional to the amount of lost cells. Also, whenever cells are lost, the "rqSvrdp" is frozen in value indicating the cells that are in correct sequence order. The difference between the "erSvrdp" and " rqReadp" indicates to the supervisory MAC (v851) which cells are in sequence order and therefore ready for transfer to the Terminal. Whenever the "rqSvrdp" and " rqWritep" painters are equal, no out of sequence transmission has occurred, Out of order cell retransmissions are handled by the v851 which adjusts the " rqSvrdp" pointer as appropriate. The flowchart shown in Fig. 27 shows the operation of the receiver.

As can be readily appreciated by those skilled in the art, the implementation of PP-II (the second part of the memory pointer processor 406 (Fig. 12)) is more complex than that of the PP-I (the first part of the memory pointer processor 406 (Fig. 12). But, a similar datapath structure can be used to generate the required address pointers to the Cell Pool RAM 206 (Fig. 12) like in the address generator of the first part (PP-I) of the memory pointer processor 406 of Fig. 18.

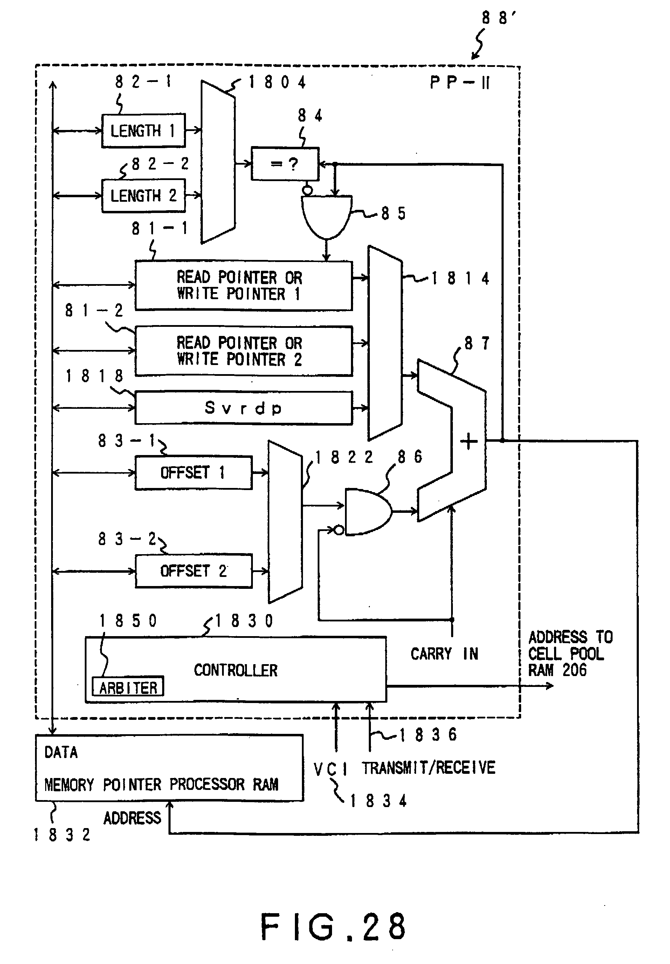

Fig. 28 shows in the second part (PP-II) of the memory pointer processor 406, an address generator 88' which generates the required address pointers (or locations) of the Cell Pool RAM 206. The second part (PP-II) of the memory pointer processor 406 has also a function for controlling (or supervising) buffering operation of the Cell Pool RAM 206 for the cell which is already transmitted to a counterpart device through a wireless transmission path and for which an acknowledgement signal is not yet received from the counterpart device. In Fig. 28, the address generator 88' comprises internal PP-II registers 81-1, 81-2, 82-1, 82-2, 83-1, 83-2, and 1818, a comparator 84, logic gates (inhibit gates) 85 and 86, an adder 87, and a controller 1830.

Specifically, a "VCI" value 1834 indicating which queue to access, and a "Transit/Receive" signal 1836 indicating which direction data is coming from, are provided to the PP-II controller 1830. The controller 1830 then accesses the respective VCI region and load the Xpointer and XQueue, or the RPointer and RQueue parameters in the PP-II registers. For instance, in the transmit direction the "xLength" value would be loaded in the length 1 register 82-1, and the "xqLength" in the length 2 register 82-2. The "xOffset" and "xqOffset" are loaded in the Offset 1 register 83-1 and Offset 2 register 83-2, respectively. The remaining parameters are then loaded in the read or Write 1 and 2, and Svrdp registers (81-1, 81-2, and 1818 respectively). The controller 1830 then uses finite State Machines (FSM) or a microprogram to synchronize and perform the WATM Cell Pool management and DLC. The controller 1830 also arbitrates through the effect of the arbiter 1850, access to the Cell Pool RAM 206 by either the WATM/AAL Co-processor 210 (Fig. 12) or the TDMA Framer 208 (Fig. 12). The controller 1830 also provides the pointer (address) to the Cell Pool RAM 206).

Preferably, the TDMA Framer 208 should be given priority and the WATM/AAL Co-processor 210 functionality should be frozen. If information is being transferred to the Cell Pool RAM 206 by the WATM/AAL Co-processor 210, its temporary Xpointer and XQueue register status should be stored in the memory pointer processor RAM 1832 of the memory pointer processor 406 (Fig. 12) and then stored after the TDMA Framer 208 is finished with its task. Finally, access to the pointer processor RAM 1832 should be arbitrated by the arbiter 1850 since the v851 also requires to set up and collect information about queue status on this memory component.

The function of the TDMA framer 208 is to transmit and receive WATM cells by structuring information in a TDMA/TDD format. It is preferably designed in a flexible manner so as to operate at both the Remote and Base stations. The TDMA Framer 208 should be given priority access to the Cell Pool RAM 206 by control of the PP block whenever data is to be stored or retrieved. Transmission by the Framer 208 should be controlled by an internal table, which is setup by the supervisory MAC functions running in software at the v851.

## Claims

1. A network interface card (400, 400') for providing an interface between a host (110, 108) and a wireless asynchronous transmitter mode, hereinafter abbreviated to WATM, based communications network (102), which comprises a local bus (201) for interconnecting components on said card; and bus interface means, connected to said local bus (201) and a system bus contained within said host (110, 108), for interconnecting said local bus (201) to said system bus the network interface card (400, 400')
**characterized by:**
controller means (402), connected to said local bus (201), for controlling local operations on said network interface card (400, 400');
randomly-accessible memory means (218), connected to said local bus (201), for storage of working program and data;
read-only memory means (216), connected to said local bus (201), for storage of program code and data necessary for operating said controller means (402);
dual-port memory means (413') connected to said local bus (201) and said bus interface means, for providing communication between said network interface card (400, 400') and said host (110, 108), said dual-port memory (413') being partitioned into a plurality of different regions wherein each region stores a particular type of data;
WATM/AAL co-processor means (210), connected to said dual-port memory means (413') and said local bus (201), for formatting ATM cells into different ATM Adaptation Layer, hereinafter abbreviated to AAL, ATM, and WATM transport protocols; memory pointer processor means (406);
Cell Pool RAM means (206), connected to said WATM/AAL co-processor means (210) and said memory pointer processor means (406), for buffering ATM cells to be transmitted or received by said network interface card (400, 400');
Time Division Multiple Access hereinafter abbreviated to TDMA, framing means (408), connected to said WATM/AAL co-processor means (210), said local bus (201), and said Cell Pool RAM
means (206), for synchronizing and delineating frames received and transmitted by said network interface card (400, 400');
MODEM/radio means (410), connected to said local bus (201) and said TDMA framing means (408), for modulating and demodulating ATM cells to be transmitted and received from said wireless asynchronous transfer mode based communications network (102); and
antenna means (412), connected to said MODEM/radio means (410), for sending and receiving ATM cells over said wireless asynchronous transfer mode based communications network (102);
said memory pointer processor means (406) being connected to said WATM/AAL co-processor means (210), said local bus (201), and said dual-port memory means (413'), for generating address locations indicating where data is to be stored or retrieved by said WATM AAL co-processor means (210) and said TDMA framing means (408).

2. A network interface card (400, 400') according to claim 1, wherein said dual-port memory means (413') comprises as said different regions:
a message region (414'), which stores control messages exchanged between said host (110, 108) and said controller means (402) and between said wireless asynchronous transfer mode based communications network (102) and the controller means (402);
a control region (414");
an Available Bit Rate, hereinafter abbreviated to ABR, region (418);
a Variable Bit Rate, hereinafter abbreviated to VBR, region (420); and
a Constant Bit Rate, hereinafter abbreviated to CBR, region (422);
each of said ABR, said VBR, and said CBR regions (418, 420, 422) implements a first-in first-out methodology to buffer ATM cells transmitted to or received from said wireless asynchronous transfer mode based communications network (102).

3. A network interface card (400, 400') according to claim 2, wherein said dual-port memory means (413') comprises as each of said ABR, said VBR, and said CBR regions (418, 420, 422):
a pair of first-in first-out memories including a transmit first-in first-out memory and a receive first-in first-out memory.

4. A network interface card (400, 400') according to claim 3, wherein said control region (414") of the dual-port memory means (413') comprises:
an offset parameter which indicates a start address of one of the first-in first-out memories of said dual-port memory means (413');
a length parameter which indicates a length of said one of the first-in first-out memories addressed by the offset parameter;
a write pointer which indicates a distance value from the offset address where data is to be stored in said one of the first-in first-out memories; and
a read pointer which indicates a distance value from the offset address where data is to be read in said one of the first-in first-out memories.

5. A network interface card (400, 400') according to claim 1, wherein said WATM/AAL co-processor means (210) comprises:
an instruction controller (62) for controlling said WATM/AAL co-processor (210);
a program RAM (64), connected to said instruction controller (62) which contains a set of instructions that when operated on by said instruction controller, implement AAL, ATM and WATM transport protocols;
a set of registers (80) which contain protocol overhead data inserted by said controller means (402); and
a set of pipeline stages, connected to said dual-port memory means (413'), said randomly accessible memory means, said set of registers, and said instruction controller, that formats AAL, ATM and WATM cells.

6. A network interface card (400, 400') according to claim 5, wherein said set of pipeline stages comprises:
a first multiplexer stage (78), connected to said dual-port memory means (413'), said set of registers, and said instruction controller (62) for multiplexing the overhead data contained in the set of registers with data contained in said dual-port memory means (413') to produce first multiplexed data;
an Arithmetic and Logic Unit, hereinafter abbreviated to ALU, stage, connected to said first multiplexer stage and said instruction controller, that operates on a sequence number contained within the multiplexed data;
a shuffle stage (74), connected to said ALU stage and said instruction controller (62), which performs bit shifting on said first multiplexed data;
a CRC stage, connected to said shuffle stage (74) and said instruction controller (62), that generates check data for CRC for said first multiplexed data;
a second multiplexer stage (70), connected to said CRC stage and said instruction controller, that multiplexes the check data for CRC with said first multiplexed data to produce second multiplexed data;
a CRC-16 stage, connected to said second multiplexer stage and said instruction controller, for generating check data for CTC-16 for said second multiplexed data;
a third multiplexer stage (66), connected to said CRC-16 stage, said cell pool RAM means, and said instruction controller, that multiplexes said second multiplexed data with the check data for CRC-16.

7. A network interface card (400, 400') according to claim 6, wherein said memory pointer processor means comprises:
a PP-I section which controls the reading and writing of data to and from the dual-port memory means (413'); and
a PP-II section, which generates memory address locations of said cell pool RAM means.

8. A network interface card (400, 400') according to claim 7, wherein said PP-II section further has a function for controlling buffering operation of said cell pool RAM means for the ATM cell which is already transmitted to said wireless asynchronous transfer mode based communications network (102) and for which an acknowledgement signal is not yet received from said wireless asynchronous transfer mode based communications network (102).

9. A network interface card (400, 400') according to claim 2, wherein each of said ABR, said VBR, and said CBR regions is further sub-divided into a set of sub-regions, such that each of said sub-regions is associated with a particular connection.

10. A queue management method for a network interface card (400, 400') which provides an interface between a host (110, 108) and a wireless asynchronous transfer mode, hereinafter abbreviated to WATM, based communication network (102) and which comprises a local bus (201) for interconnecting components on the card (400, 400'); and
bus interface means, connected to said local bus (201) and a system bus contained within said host (110, 108), for interconnecting said local bus(201) to said system bus, the network interface card (400, 400') and the method
**characterized by:**
controller means (402), connected to said local bus (201), for controlling local operations on said network interface card (400, 400');
randomly-accessible memory means (218), connected to said local bus (201), for storage of working program and data;
read-only memory means (216), connected to said local bus (201), for storage of program code and data necessary for operating said controller means (402);
dual-port memory means (413') connected to said local bus (201) and said bus interface means, for providing communication between said network interface card (400, 400') and said host (110, 108), said dual-port memory (413') being partitioned into a plurality of different regions wherein each region stores a particular type of data;
WATM/AAL co-processor means (210), connected to said dual-port memory means (413') and said local bus (201), for formatting ATM cells into different ATM Adaptation Layer, hereinafter abbreviated to AAL, ATM, and WATM transport protocols;
memory pointer processor means (406);
cell pool RAM means (206), connected to said WATM/AAL co-processor means (210) and said memory pointer processor means (406), for buffering ATM cells to be transmitted or received by said network interface card (400, 400');
TDMA framing means (408), connected to said WATM/AAL co-processor means (210), said local bus (201), and said cell poor RAM means (206), for synchronizing and delineating frames received and transmitted by said network interface card (400, 400');
MODEM/radio means (410), connected to said local bus (201) and said TDMA framing means (408), for modulating and demodulating cells to be transmitted and received from said wireless asynchronous transfer mode based communications network (102); and
antenna means (412), connected to said MODEM/radio means (410), for sending and receiving ATM cells over said wireless asynchronous transfer mode based communications network (102);
said memory pointer processor means (406) being connected to said WATM/AAL co-processor means (210), said local bus (201), and said dual-port memory means (413'), for generating address locations indicating where data is to be stored or retrieved by said WATM/AAL co-processor means (210) and said TDMA framing means (408),
said method comprising the steps of:
when transmitting a set of ATM cells over said wireless asynchronous transfer mode based communications network (102);
a) transmitting said ATM cells in a first-in first-out manner under control of said memory pointer processor means (406);
b) determining, that a Data Link Control, hereinafter abbreviated to DLC, error has occurred for a particular cell;
c) recovering, from the DLC error by informing said controller means (402) of the DLC error such that recovery from this DLC error occurs under the control of said controller means (402) while any remaining cells in the set of ATM cells are transmitted under the control of said memory pointer processor means (406); and
d) repeating the above steps a-c until all ATM cells in the set of ATM cells are without error or generate a time-out condition;
and when receiving a set of ATM cells over the wireless asynchronous transfer mode based communications network (102);
e) receiving said ATM cells in a first-in first-out manner under control of said memory pointer processor means (406);
f) determining, that a DLC error has occurred for a particular ATM cell;
g) recovering, from the DLC error by informing said controller means (402) of the DLC error such that recovery from this DLC error occurs under the control of said controller means (402) while any remaining ATM cells in the set of ATM cells are received under the control of said memory pointer processor means (406); and
h) repeating the above steps e-g until all ATM cells in the set of ATM cells are transmitted correctly or generate a time-out condition.

## Patentansprüche

1. Netzwerk-Schnittstellenkarte (400, 400') zum Bereitstellen einer Schnittstelle zwischen einem Host (110, 108) und einem Kommunikationsnetzwerk (102), das auf WATM (Wireless Asynchronous Transmitter Mode) basiert, die einen lokalen Bus (201), der Komponenten auf der Karte miteinander verbindet, und eine Bus-Schnittstelleneinrictung umfasst, die mit dem lokalen Bus (201) und einem System-Bus verbunden ist, der in dem Host (110, 108) enthalten ist, um den lokalen Bus (201) und den Systembus miteinander zu verbinden, wobei die Netzwerk-Schnittstellenkarte (400, 400') **gekennzeichnet ist durch:**
eine Controller-Einrichtung (402), die mit dem lokalen Bus (201) verbunden ist, um lokale Operationen auf der Netzwerk-Schnittstellenkarte (400, 400') zu steuern;
eine Direktzugriffsspeichereinrichtung (216), die mit dem lokalen Bus (201) verbunden ist und der Speicherung von Arbeitsprogramm und Daten dient,
eine Festwertspeichereinrichtung, die der Speicherung von Programmcode und Daten dient, die zum Betreiben der Controller-Einrichtung (402) erforderlich sind;
eine Dual-Port-Speichereinrichtung (413'), die mit dem lokalen Bus (201) und der Bus-Schnittstelleneinrichtung verbunden ist, um Kommunikation zwischen der Netzwerk-Schnittstellenkarte (400, 400') und dem Host (110, 108) zu ermöglichen, wobei der Dual-Port-Speicher (413') in eine Vielzahl unterschiedlicher Bereiche unterteilt ist und jeder Bereich einen bestimmten Typ Daten speichert;
eine WATM/AAL-Coprozessoreinrichtung (210), die mit der Dual-Port-Speichereinrichtung (413') und dem lokalen Bus (201) verbunden ist, um ATM-Zellen in verschiedene AAL (ATM Adaption Layer)-, ATM- und WATM-Transportprotokolle zu formatieren;
eine Speicherzeiger-Prozessoreinrichtung (406);
eine Zellen-Pool-RAM-Einrichtung (206), die mit der WATM/AAL-Coprozessoreinrichtung (210) sowie der Speicherzeiger-Prozessoreinrichtung (406) verbunden ist und der Pufferung von ATM-Zellen dient, die **durch** die Netzwerk-Schnittstellenkarte (400, 400') gesendet oder empfangen werden sollen;
eine TDMA-Rahmenbildungseinrichtung (Time Division Multiple Access framing means) (408), die mit der WATM/AAL-Coprozessoreinrichtung (210), dem lokalen Bus (201) sowie der Zellen-Pool-RAM-Einrichtung (206) verbunden ist und der Synchronisierung sowie Abgrenzung von Rahmen dient, die **durch** die Netzwerk-Schnittstellenkarte (400, 400') empfangen und gesendet werden;
eine MODEM/Funkeinrichtung (410), die mit dem lokalen Bus (201) sowie der TDMA-Rahmenbildungseinrichtung (408) verbunden ist und dazu dient, ATM-Zellen zu modulieren und zu demodulieren, die von dem WATM-basierten Kommunikations-Netzwerk (102) gesendet und empfangen werden sollen; und
eine Antenneneinrichtung (412), die mit der MODEM/Funkeinrichtung (410) verbunden ist und dazu dient, ATM-Zellen über das WATM-basierte Kommunikations-Netzwerk (102) zu senden und zu empfangen;
wobei die Speicherzeiger-Prozessoreinrichtung (406) mit der WATM/AAL-Coprozessoreinrichtung (210), dem lokalen Bus (201) sowie der Dual-Port-Speichereinrichtung (413') verbunden ist und dazu dient, Adressenpositionen zu erzeugen, die anzeigen, wo Daten **durch** die WATM/AAL-Coprozessoreinrichtung (210) und die TDMA-Rahmenbildungseinrichtung (408) gespeichert und abgerufen werden sollen.

2. Netzwerk-Schnittstellenkarte (400, 400') nach Anspruch 1, wobei die Dual-Port-Speichereinrichtung (413') als die unterschiedlichen Bereiche umfasst:
einen Nachrichtenbereich (414'), der Steuernachrichten speichert, die zwischen dem Host (110, 108) und der Controller-Einrichtung (402) sowie zwischen dem WATM-basierten Kommunikations-Netzwerk (102) und der Controller-Einrichtung (402) ausgetauscht werden;
einen Steuerbereich (414");
einen ABR-Bereich (Available Bit Rate region) (418);
einen VBR-Bereich (Variable Bit Rate region) (420); und
einen CBR-Bereich (Constant Bit Rate region) (422);
wobei der ABR-, der VBR- und der CBR-Bereich (418, 420, 422) jeweils eine Fifo-Methode (first-in first-out methodology) einsetzen, um ATM-Zellen zu speichern, die zu dem WATM-basierten Kommunikations-Netzwerk (102) gesendet oder von ihm empfangen werden.

3. Netzwerk-Schnittstellenkarte (400, 400') nach Anspruch 2, wobei die Dual-Port-Speichereinrichtung (413') als den ABR-, den VBR- und den CBR-Bereich (418, 420, 422) jeweils umfasst:
ein Paar Fifo-Speicher, das einen Sende-Fifo-Speicher und einen Empfangs-Fifo-Speicher enthält.

4. Netzwerk-Schnittstellenkarte (400, 400') nach Anspruch 3, wobei der Steuerbereich (414") der Dual-Port-Speichereinrichtung (413') umfasst:
einen Offset-Parameter, der eine Start-Adresse eines der Fifo-Speicher der Dual-Port-Speichereinrichtung (413') anzeigt;
einen Längen-Parameter, der eine Länge des einen der Fifo-Speicher anzeigt, der durch den Offset-Parameter adressiert wird;
einen Schreib-Zeiger, der einen Wert der Distanz zu der Offset-Adresse anzeigt, an der Daten in dem einen der Fifo-Speicher gespeichert werden sollen; und
einen Lese-Zeiger, der einen Wert der Distanz zu der Offset-Adresse anzeigt, an der Daten in dem einen der Fifo-Speicher gelesen werden sollen.

5. Netzwerk-Schnittstellenkarte (400, 400') nach Anspruch 1, wobei die WATM/AAL-Coprozessoreinrichtung (210) umfasst:
einen Befehls-Controller (62) zum Steuern des WATM/AAL-Coprozessors (210);
einen Programm-RAM (64), der mit dem Befehls-Controller (62) verbunden ist und einen Satz von Befehlen enthält, die, wenn durch den Befehls-Controller mit ihnen operiert wird, AAL-, ATM- und WATM-Transportprotokolle implementieren;
eine Gruppe von Registern (80), die durch die Controller-Einrichtung (402) eingefügte Protokoll-Overhead-Daten enthalten; und
eine Gruppe von Pipeline-Stufen, die mit der Dual-Port-Speichereinrichtung (413'), der Direktzugriffsspeichereinrichtung, der Gruppe von Registern sowie dem Befehls-Controller verbunden ist und AAL-, ATM- und WATM-Zellen formatiert.

6. Netzwerk-Schnittstellenkarte (400, 400') nach Anspruch 5, wobei die Gruppe von Pipeline-Stufen umfasst:
eine erste Multiplexer-Stufe (78), die mit der Dual-Port-Speichereinrichtung (413'), der Gruppe von Registern sowie dem Befehls-Controller (62) verbunden ist und dazu dient, die in der Gruppe von Registern enthaltenen Overhead-Daten mit Daten zu multiplexieren, die in der Dual-Port-Speichereinrichtung (413') enthalten sind, um erste multiplexierte Daten zu erzeugen;
eine ALU-Stufe (Arithmetic and Logic Unit stage), die mit der ersten Multiplexer-Stufe sowie dem Befehls-Controller verbunden ist und die mit einer Sequenznummer operiert, die in den multiplexierten Daten enthalten ist;
eine Schiebe-Stufe (74), die mit der ALU-Stufe sowie dem Befehls-Controller (62) verbunden ist und Verschiebung an den ersten multiplexierten Daten durchführt;
eine CRC-Stufe, die mit der Schiebe-Stufe (74) sowie dem Befehls-Controller (62) verbunden ist und Prüfdaten für CRC für die ersten multiplexierten Daten erzeugt;
eine zweite Multiplexer-Stufe (70), die mit der CRC-Stufe sowie dem Befehls-Controller verbunden ist und die Prüfdaten für CRC mit den ersten multiplexierten Daten multiplexiert, um zweite multiplexierte Daten zu erzeugen;
eine CRC-16-Stufe, die mit der zweiten Multiplexer-Stufe sowie dem Befehls-Controller verbunden ist und dazu dient, Prüfdaten für CRC-16 für die zweiten multiplexierten Daten zu erzeugen;
eine dritte Multiplexer-Stufe (66), die mit der CRC-16-Stufe, der Zellen-Pool-RAM-Einrichtung sowie dem Befehls-Controller verbunden ist und die zweiten multiplexierten Daten mit den Prüfdaten für CRC-16 multiplexiert.

7. Netzwerk-Schnittstellenkarte (400, 400') nach Anspruch 6, wobei die Speicherzeiger-Prozessoreinrichtung umfasst:
einen PP-I-Abschnitt, der das Lesen und Schreiben von Daten aus der Dual-Port-Speichereinrichtung (413') bzw. in sie steuert; und
einen PP-II-Abschnitt, der Speicheradressen-Positionen der Zellen-Pool-RAM-Einrichtung erzeugt.

8. Netzwerk-Schnittstellenkarte (400, 400') nach Anspruch 7, wobei eine Funktion des PP-II-Abschnitts des Weiteren darin besteht, Puffer-Betrieb der Zellen-Pool-RAM-Einrichtung für die ATM-Zelle zu steuern, die bereits zu dem WATM-basierten Kommunikations-Netzwerk (102) gesendet ist und für die noch kein Bestätigungssignal von dem WATM-basierten Kommunikations-Netzwerk (102) empfangen worden ist.

9. Netzwerk-Schnittstellenkarte (400, 400') nach Anspruch 2, wobei der ABR-, der VBR- und der CBR-Bereich jeweils des Weiteren in eine Gruppe von Teilbereichen so unterteilt sind, dass jeder der Teilbereiche mit einer bestimmten Verbindung verknüpft ist.

10. Warteschlangen-Verwaltungsverfahren für eine Netzwerk-Schnittstellenkarte (400, 400'), die eine Schnittstelle zwischen einem Host (110, 108) und einem Kommunikations-Netzwerk (102) bereitstellt, das auf WATM (Wirless Asynchronous Transfer Mode) basiert, und die einen lokalen Bus (201), der Komponenten auf der Karte (400, 400') miteinander verbindet, sowie eine Bus-Schnittstelleneinrichtung umfasst, die mit dem lokalen Bus (201) und einem Systembus verbunden ist, der in dem Host (110, 108) enthalten ist, um den lokalen Bus (201) und den Systembus miteinander zu verbinden, wobei die Netzwerk-Schnittstellenkarte (400, 400') und das Verfahren **gekennzeichnet sind durch:**
eine Controller-Einrichtung (402), die mit dem lokalen Bus (201) verbunden ist, um lokale Operationen auf der Netzwerk-Schnittstellenkarte (400, 400') zu steuern;
eine Direktzugriffsspeichereinrichtung (216), die mit dem lokalen Bus (201) verbunden ist und der Speicherung von Arbeitsprogramm und Daten dient,
eine Festwertspeichereinrichtung, die der Speicherung von Programmcode und Daten dient, die zum Betreiben der Controller-Einrichtung (402) erforderlich sind;
eine Dual-Port-Speichereinrichtung (413'), die mit dem lokalen Bus (201) und der Bus-Schnittstelleneinrichtung verbunden ist, um Kommunikation zwischen der Netzwerk-Schnittstellenkarte (400, 400') und dem Host (110, 108) zu ermöglichen, wobei der Dual-Port-Speicher (413') in eine Vielzahl unterschiedlicher Bereiche unterteilt ist und jeder Bereich einen bestimmten Typ Daten speichert;
eine WATM/AAL-Coprozessoreinrichtung (210), die mit der Dual-Port-Speichereinrichtung (413') und dem lokalen Bus (201) verbunden ist, um ATM-Zellen in verschiedene AAL (ATM Adaption Layer)-, ATM- und WATM-Transportprotokolle zu formatieren;
eine Speicherzeiger-Prozessoreinrichtung (406);
eine Zellenpool-RAM-Einrichtung (206), die mit der WATM/AAL-Coprozessoreinrichtung (210) und der Speicherzeiger-Prozessoreinrichtung (406) verbunden ist und der Pufferung von ATM-Zellen dient, die **durch** die Netzwerk-Schnittstellenkarte (400, 400') gesendet oder empfangen werden sollen;
eine TDMA-Rahmenbildungseinrichtung (Time Division Multiple Access framing means) (408), die mit der WATM/AAL-Coprozessoreinrichtung (210), dem lokalen Bus (201) sowie der Zellen-Pool-RAM-Einrichtung (206) verbunden ist und der Synchronisierung und Abgrenzung von Rahmen dient, die **durch** die Netzwerk-Schnittstellenkarte (400, 400') empfangen und gesendet werden;
eine MODEM/Funkeinrichtung (410), die mit dem lokalen Bus (201) sowie der TDMA-Rahmenbildungseinrichtung (408) verbunden ist und dazu dient, ATM-Zellen zu modulieren und zu demodulieren, die von dem WATM-basierten Kommunikations-Netzwerk (102) gesendet und empfangen werden sollen; und
eine Antenneneinrichtung (412), die mit der MODEM/Funkeinrichtung (410) verbunden ist und dazu dient, ATM-Zellen über das WATM-basierte Kommunikations-Netzwerk (102) zu senden und zu empfangen;
wobei die Speicherzeiger-Prozessoreinrichtung (406) mit der WATM/AAL-Coprozessoreinrichtung (210), dem lokalen Bus (201) sowie der Dual-Port-Speichereinrichtung (413') verbunden ist und dazu dient, Adressenpositionen zu erzeugen, die anzeigen, wo Daten **durch** die WATM/AAL-Coprozessoreinrichtung (210) und die TDMA-Rahmenbildungseinrichtung (408) gespeichert und abgerufen werden sollen,
wobei das Verfahren die folgenden Schritte umfasst:
beim Senden einer Gruppe von ATM-Zelten über das WATM-basierte Kommunikations-Netzwerk:
a) Senden der ATM-Zellen in einem Fifo-Verfahren (first-in firt-out manner) gesteuert von der Speicherzeiger-Prozessoreinrichtung (406);
b) Feststellen, dass ein DLC-Fehler (Data Link Control error) bei einer bestimmten Zelle aufgetreten ist;
c) Beheben des DLC-Fehlers **durch** Informieren der Controller-Einrichtung (402) über den DLC-Fehler, so dass Behebung dieses DLC-Fehlers von der Controller-Einrichtung (402) gesteuert stattfindet, während jegliche verbleibenden Zellen in der Gruppe von ATM-Zellen von der Speicherzeiger-Prozessoreinrichtung (406) gesteuert gesendet werden; und
d) Wiederholen der oben aufgeführten Schritte a)-c), bis alle ATM-Zellen in der Gruppe von ATM-Zellen ohne Fehler sind oder einen Timeout-Zustand erzeugen;
und beim Empfangen einer Gruppe von ATM-Zellen über das WATM-basierte Kommunikations-Netzwerk (102):
e) Empfangen der ATM-Zellen in einem Fifo-Verfahren gesteuert von der Speicherzeiger-Prozessoreinrichtung (406);
f) Feststellen, dass ein DLC-Fehler bei einer bestimmten ATM-Zelle aufgetreten ist;
g) Beheben des DLC-Fehlers **durch** Informieren der Controller-Einrichtung (402) über den DLC-Fehler, so dass Behebung dieses DLC-Fehlers von der Controller-Einrichtung (402) gesteuert stattfindet, während jegliche verbleibenden ATM-Zellen in der Gruppe von ATM-Zellen von der Speicherzeiger-Prozessoreinrichtung (406) gesteuert empfangen werden; und
h) Wiederholen der oben aufgeführten Schritte e)-g), bis alle ATM-Zellen in der Gruppe von ATM-Zellen ordnungsgemäß gesendet sind oder einen Timeout-Zustand erzeugen.

## Revendications

1. Carte d'interface de réseau (400, 400') servant à créer une interface entre un hôte (110, 108) et un réseau de communication basé sur le mode de transmission asynchrone sans fil (102), abrégé ci-après en WATM, qui comprend un bus local (201) servant à l'interconnexion de composants sur ladite carte ; et un moyen d'interface de bus, connecté audit bus local (201) et à un bus système contenu dans ledit hôte (110, 108), pour l'interconnexion dudit bus local (201) audit bus système, la carte d'interface de réseau (400, 400') étant **caractérisée par** :
un moyen de commande (402), connecté audit bus local (201), servant à commander des opérations locales sur ladite carte de réseau d'interface (400, 400') ;
un moyen de mémoire vive (218), connecté audit bus local (201), servant au stockage d'un programme de travail et de données ;
un moyen de mémoire morte (216), connecté audit bus local (201), servant au stockage d'un code de programme et de données nécessaires au fonctionnement dudit moyen de commande (402) ;
un moyen de mémoire double port (413') connecté audit bus local (201) et audit moyen d'interface de bus, permettant la communication entre ladite carte d'interface de réseau (400, 400') et ledit hôte (110, 108), ladite mémoire double port (413') étant divisée en une pluralité de régions différentes, chaque région stockant un type particulier de données ;
un moyen coprocesseur WATM/AAL (210), connecté audit moyen de mémoire double port (413') et audit bus local (201), servant à formater les cellules ATM en différents protocoles de transport WATM, ATM et de couche d'adaptation ATM, abrégé ci-après en AAL ;
un moyen de traitement de pointeur de mémoire (406) ;
un moyen de mémoire vive de regroupement de cellules (206), connecté audit moyen coprocesseur WATM/AAL (210) et audit moyen de traitement de pointeur de mémoire (406), servant à mettre en mémoire-tampon les cellules ATM à transmettre ou à recevoir par ladite carte d'interface de réseau (400, 400') ;
un moyen de tramage à accès multiple à répartition dans le temps (408), abrégé ci-après en TDMA, connecté audit moyen coprocesseur WATM/AAL (210), audit bus local (201) et audit moyen de mémoire vive de regroupement de cellules (206), servant à la synchronisation et à la délimitation des trames reçues et transmises par ladite carte d'interface de réseau (400, 400') ;
un moyen MODEM/radio (410), connecté audit bus local (201) et audit moyen de tramage TDMA (408), servant à moduler et à démoduler les cellules ATM à transmettre audit réseau de communication basé sur le mode de transfert asynchrone sans fil (102) et à recevoir en provenance de ce dernier ; et
un moyen d'antenne (412), connecté audit moyen MODEM/radio (410), servant à envoyer et à recevoir des cellules ATM sur ledit réseau de communication basé sur le mode de transfert asynchrone sans fil (102) ;
ledit moyen de traitement de pointeur de mémoire (406) étant connecté audit moyen coprocesseur WATM/AAL (210), audit bus local (201) et audit moyen de mémoire double port (413'), servant à générer des emplacements d'adresse indiquant où les données doivent être stockées ou extraites par ledit moyen coprocesseur WATM AAL (210) et ledit moyen de tramage TDMA (408).

2. Carte d'interface de réseau (400, 400') selon la revendication 1, dans laquelle ledit moyen de mémoire double port (413') comprend en tant que différentes régions :
une région de message (414'), qui stocke des messages de commande échangés entre ledit hôte (110, 108) et ledit moyen de commande (402) et entre ledit réseau de communication basé sur le mode de transfert asynchrone sans fil (102) et le moyen de commande (402) ;
une région de commande (414") ;
une région à débit binaire disponible, abrégé ci-après en ABR, (418) ;
une région à débit binaire variable, abrégé ci-après en VBR, (420) ; et
une région à débit binaire constant, abrégé ci-après en CBR, (422) ;
chacune desdites régions ABR, VBR et CBR (418, 420, 422) mettant en oeuvre une méthodologie premier entré, premier sorti pour mettre en mémoire-tampon les cellules ATM transmises audit réseau de communication basé sur le mode de transfert asynchrone sans fil (102) ou à recevoir en provenance de ce dernier.

3. Carte d'interface de réseau (400, 400') selon la revendication 2, dans laquelle ledit moyen de mémoire double port (423') comprend en tant que chacune desdites régions ABR, VBR et CBR (418, 420, 422) :
une paire de mémoires premier entré, premier sorti comprenant une mémoire premier entré, premier sorti de transmission et une mémoire premier entré, premier sorti de réception.

4. Carte d'interface de réseau (400, 400') selon la revendication 3, dans laquelle ladite région de commande (414") du moyen de mémoire double port (413') comprend :
un paramètre de décalage qui indique une adresse de départ d'une des mémoires premier entré, premier sorti dudit moyen de mémoire double port (413') ;
un paramètre de longueur qui indique une longueur de ladite mémoire premier entré, premier sorti adressée par le paramètre de décalage ;
un pointeur d'écriture qui indique une valeur de distance par rapport à l'adresse de décalage où les données sont à stocker dans ladite mémoire premier entré, premier sorti ; et
un pointeur de lecture qui indique une valeur de distance par rapport à l'adresse de décalage où les données sont à lire dans ladite mémoire premier entré, premier sorti.

5. Carte d'interface de réseau (400, 400') selon la revendication 1, dans laquelle ledit moyen coprocesseur WATM/AAL (210) comprend :
un dispositif de commande d'instruction (62) servant à commander ledit coprocesseur WATM/AAL (210) ;
une RAM de programme (64), connectée audit dispositif de commande d'instruction (62) qui contient un ensemble d'instructions qui, lorsqu'elles sont appliquées par ledit dispositif de commande d'instruction, met en oeuvre les protocoles de transport AAL, ATL et WATM ;
un ensemble de registres (80) qui contiennent des données supplémentaires de protocole insérées par ledit moyen de commande (402) ; et
un ensemble d'étages de pipeline, connectés audit moyen de mémoire double port (413'), audit moyen de mémoire vive, audit ensemble de registres et audit dispositif de commande d'instruction, qui formatent les cellules AAL, ATM et WATM.

6. Carte d'interface de réseau (400, 400') selon la revendication 5, dans laquelle ledit ensemble d'étages de pipeline comprend :
un premier étage de multiplexage (78), connecté audit moyen de mémoire double port (413'), audit ensemble de registres, et audit dispositif de commande d'instruction (62) servant à multiplexer les données supplémentaires contenues dans l'ensemble de registres avec des données contenues dans ledit moyen de mémoire double port (413') pour produire des premières données multiplexées ;
un étage d'unité arithmétique et logique, abrégé ci-après en ALU, connecté audit premier étage de multiplexage et audit dispositif de commande d'instruction, qui agit sur un numéro de séquence contenu dans les données multiplexées ;
un étage de déplacement (74), connecté audit étage ALU et audit dispositif de commande d'instruction (62), qui effectue un déplacement de bit sur lesdites premières données multiplexées ;
un étage CRC, connecté audit étage de déplacement (74) et audit dispositif de commande d'instruction (62), qui génère des données de vérification pour CRC pour lesdites premières données multiplexées ;
un deuxième étage de multiplexage (70), connecté audit étage CRC et audit dispositif de commande d'instruction, qui multiplexe les données de vérification pour CRC avec lesdites premières données multiplexées pour produire des deuxièmes données multiplexées ;
un étage CRC-16, connecté audit deuxième étage de multiplexage et audit dispositif de commande d'instruction, servant à générer des données de vérification pour CTC-16 pour lesdites deuxièmes données multiplexées ;
un troisième étage de multiplexage (66), connecté audit étage CRC-16, audit moyen de mémoire vive de regroupement de cellules, et audit dispositif de commande d'instruction, qui multiplexe lesdites deuxièmes données multiplexées avec les données de vérification pour CRC-16.

7. Carte d'interface de réseau (400, 400') selon la revendication 6, dans laquelle ledit moyen de traitement de pointeur de mémoire comprend :
une section PP-I qui commande la lecture et l'écriture de données dans et depuis le moyen de mémoire double port (413'); et
une section PP-II, qui génère des emplacements d'adresse de mémoire dudit moyen de mémoire vive de regroupement de cellules.

8. Carte d'interface de réseau (400, 400') selon la revendication 7, dans laquelle ladite section PP-II présente en outre une fonction servant à commander l'opération de mise en mémoire-tampon dudit moyen de mémoire vive de regroupement de cellules pour la cellule ATM qui est déjà transmise audit réseau de communication basé sur le mode de transfert asynchrone sans fil (102) et pour laquelle un signal de reconnaissance n'est pas encore reçu en provenance dudit réseau de communication basé sur le mode de transfert asynchrone sans fil (102).

9. Carte d'interface de réseau (400, 400') selon la revendication 2, dans laquelle chacune desdites régions ABR, VBR et CBR est en outre subdivisée en un ensemble de sous-régions, de sorte que chacune desdites sous-régions soit associée à une connexion particulière.

10. Procédé de gestion de file d'attente pour une carte d'interface de réseau (400, 400') qui crée une interface entre un hôte (110, 108) et un réseau de communication basé sur le mode de transfert asynchrone sans fil (102), abrégé ci-après en WATM, qui comprend un bus local (201) servant à l'interconnexion de composants sur ladite carte ; et un moyen d'interface de bus, connecté audit bus local (201) et à un bus système contenu dans ledit hôte (110, 108), pour l'interconnexion dudit bus local (201) audit bus système, la carte d'interface de réseau (400, 400') et le procédé étant **caractérisés par** :
un moyen de commande (402), connecté audit bus local (201), servant à commander des opérations locales sur ladite carte de réseau d'interface (400, 400') ;
un moyen de mémoire vive (218), connecté audit bus local (201), servant au stockage d'un programme de travail et de données ;
un moyen de mémoire morte (216), connecté audit bus local (201), servant au stockage d'un code de programme et de données nécessaires au fonctionnement dudit moyen de commande (402) ;
un moyen de mémoire double port (413') connecté audit bus local (201) et audit moyen d'interface de bus, permettant la communication entre ladite carte d'interface de réseau (400, 400') et ledit hôte (110, 108), ladite mémoire double port (413') étant divisée en une pluralité de régions différentes, chaque région stockant un type particulier de données ;
un moyen coprocesseur WATM/AAL (210), connecté audit moyen de mémoire double port (413') et audit bus local (201), servant à formater les cellules ATM en différents protocoles de transport WATM, ATM et de couche d'adaptation ATM, abrégé ci-après en AAL ;
un moyen de traitement de pointeur de mémoire (406) ;
un moyen de mémoire vive de regroupement de cellules (206), connecté audit moyen coprocesseur WATM/AAL (210) et audit moyen de traitement de pointeur de mémoire (406), servant à mettre en mémoire-tampon les cellules ATM à transmettre ou à recevoir par ladite carte d'interface de réseau (400, 400') ;
un moyen de tramage TDMA (408), connecté audit moyen coprocesseur WATM/AAL (210), audit bus local (201) et audit moyen de mémoire vive de regroupement de cellules (206), servant à la synchronisation et à la délimitation des trames reçues et transmises par ladite carte d'interface de réseau (400, 400') ;
un moyen MODEM/radio (410), connecté audit bus local (201) et audit moyen de tramage TDMA (408), servant à moduler et à démoduler les cellules ATM à transmettre audit réseau de communication basé sur le mode de transfert asynchrone sans fil (102) et à recevoir en provenance de ce dernier ; et
un moyen d'antenne (412), connecté audit moyen MODEM/radio (410), servant à envoyer et à recevoir des cellules ATM sur ledit réseau de communication basé sur le mode de transfert asynchrone sans fil (102) ;
ledit moyen de traitement de pointeur de mémoire (406) étant connecté audit moyen coprocesseur WATM/AAL (210), audit bus local (201) et audit moyen de mémoire double port (413'), servant à générer des emplacements d'adresse indiquant où les données doivent être stockées ou extraites par ledit moyen coprocesseur WATM AAL (210) et ledit moyen de tramage TDMA (408),
ledit procédé comprenant les étapes consistant à :
lors de la transmission d'un ensemble de cellules ATM sur ledit réseau de communication basé sur le mode de transfert asynchrone sans fil (102) :
a) transmettre lesdites cellules ATM d'une manière premier entré, premier sorti sous le contrôle dudit moyen de traitement de pointeur de mémoire (406) ;
b) déterminer qu'une erreur de commande de liaison de données, abrégé ci-après en DLC, s'est produite pour une cellule particulière ;
c) se remettre de l'erreur DLC en informant ledit moyen de commande (402) de l'erreur DLC de sorte que le rétablissement de cette erreur DLC se produise sous le contrôle dudit moyen de commande (402) tandis que les autres cellules de l'ensemble de cellules ATM sont transmises sous le contrôle dudit moyen de traitement de pointeur de mémoire (406) ; et
d) répéter les étapes a à c ci-dessus jusqu'à ce que toutes les cellules ATM de l'ensemble de cellules ATM soient sans erreur ou génèrent une condition de temporisation ;
et lors de la réception d'un ensemble de cellules ATM sur ledit réseau de communication basé sur le mode de transfert asynchrone sans fil (102) :
e) recevoir lesdites cellules ATM d'une manière premier entré, premier sorti sous le contrôle dudit moyen de traitement de pointeur de mémoire (406) ;
f) déterminer qu'une erreur DLC s'est produite pour une cellule ATM particulière ;
g) se remettre de l'erreur DLC en informant ledit moyen de commande (402) de l'erreur DLC de sorte que le rétablissement de cette erreur DLC se produise sous le contrôle dudit moyen de commande (402) tandis que les autres cellules de l'ensemble de cellules ATM sont reçues sous le contrôle dudit moyen de traitement de pointeur de mémoire (406) ; et
h) répéter les étapes e à g ci-dessus jusqu'à ce que toutes les cellules ATM de l'ensemble de cellules ATM soient transmises correctement ou génèrent une condition de temporisation.
